# EUROPÄISCHE PATENTSCHRIFT

(11) **EP 2 379 863 B1**
(45) Veröffentlichungstag und Bekanntmachung des Hinweises auf die Patenterteilung: **21.02.2018**
(21) Anmeldenummer: 09807442.0
(22) Anmeldetag: 16.12.2009
(51) Int. Cl.: F02B 77/08, F02P 11/02, F16K 17/14

(54) **DIESELMOTOR, SOLLBRUCHBAUTEIL DAFÜR, SOWIE VERFAHREN ZUM VERMEIDEN VON BESCHÄDIGUNGEN EINES DIESELMOTORS**
DIESEL ENGINE, PREDETERMINED BREAKING POINT COMPONENT THEREFOR AND METHOD FOR PREVENTING DAMAGE TO A DIESEL ENGINE
MOTEUR DIESEL, ÉLÉMENT DE RUPTURE POUR CELUI-CI ET PROCÉDÉ POUR EMPÊCHER DES ENDOMMAGEMENTS D'UN MOTEUR DIESEL

(30) Priorität: 19.12.2008 DE 102008063968
(43) Veröffentlichungstag der Anmeldung: 26.10.2011
(73) Patentinhaber: MAN DIESEL & TURBO, FILIAL AF MAN DIESEL & TURBO SE, TYSKLAND, 2450 København SV (DK)
(72) Erfinder: PETERSEN, Arne, Kvistgaard, DK-2791 Draør (DK)
(74) Vertreter: Munk, Ludwig
(86) Internationale Anmeldenummer: PCT/EP2009/009018
(87) Internationale Veröffentlichungsnummer: WO 2010/078927

(56) Entgegenhaltungen:
- EP-A1- 0 789 194
- GB-A- 495 391
- GB-A- 735 344
- JP-A- 2007 046 528
- US-A- 4 102 167
- US-A- 4 553 559
- US-A- 4 699 096
- US-A- 5 873 340
- US-B1- 6 382 159

## Beschreibung

Die vorliegende Erfindung betrifft einen Zweitakt-Kreuzkopf-Großdieselmotor gemäß dem Oberbegriff des Anspruchs 1. Ferner betrifft die Erfindung ein Verfahren zum Vermeiden von Beschädigungen eines Zweitakt-Kreuzkopf-Großdieselmotors gemäß dem Oberbegriff des Anspruchs 27.

Bei Zweitakt-Großdieselmotoren, wie sie als Schiffsantriebe oder für Kraftwerke eingesetzt werden, ist es in der Vergangenheit zu schweren Beschädigungen und auch Gefährdungen des Bedienpersonals gekommen, wenn z.B. der Zylinderkopf aufgrund von einem auftretenden Überdruck in der Brennkammer abhebt. Dabei längen sich die Zylinderbolzen, mit welchen der Zylinderkopf mit dem Zylinder verschraubt sind, aufgrund eines übermäßigen Druckaufbaus in dem Gasvolumen zwischen dem Zylinderkopf, den Zylinderinnenwänden und dem in dem Zylinder auf- und abbewegten Kolben oder reißen sogar, weil die Zylinderbolzen für einen solchen Überdruck nicht ausgelegt sind.

Beim Abheben des Zylinderkopfs kommt es zu einem explosionsartigen Gasaustritt zwischen Zylinderkopf und Zylinder, bei dem unter einem lauten Knall von bis zu 170 dB unkontrolliert heißes Gas, oft in Form von Flammen austritt, wodurch nicht nur das Bedienpersonal gefährdet wird, sondern auch die einander zugewandten Dichtflächen am Zylinderkopf bzw. am Zylinder oder die zwischen geordnete Dichtung beschädigt werden, so dass der Zylinderkopf in einer kostenintensiven Reparatur abgenommen werden muss, um die Dichtung zu erneuern bzw. die Dichtflächen nachzuarbeiten. Auch wenn der Zylinder von einem Typ ohne abnehmbaren Zylinder ist (z.B. sog. Bugatti-Motor), kann ein vorstehend beschriebener gefährlicher Druckaufbau zu einer Beschädigung oder Verformung von inneren Motorbauteilen führen, wie z.B. zu einem verbogenen Kolbenpleuel oder sogar zu einem Versatz der Kurbelwellenverbindungen, was zu langen Standzeiten des Motors und hohen Reparaturkosten führt.

Große Schiffsversicherer schreiben zwar schon heute vor, dass gattungsgemäße Schiffsmotoren mit Sicherheitsventilen gegen derartige Beschädigungen geschützt sein müssen. Die üblicherweise bei Großdieselmotoren eingesetzten Sicherheitsventile können die vorstehend beschriebenen Schäden allerdings nicht zuverlässig verhindern, sondern haben meist lediglich die Wirkung eines Indikators bzw. einer Pfeife die vor einem kommenden Zylinderkopfabheben bzw. Zylinderbeschädigung warnt, dieses aber nicht verhindert. Denn herkömmliche Sicherheitsventile arbeiten dafür zu langsam oder müssten so groß dimensioniert werden, dass ihr Einsatz nicht praktikabel ist. Derartige Pfeif-Sicherheitsventile wurden außerdem entwickelt, um sich kontinuierlich verschlechternde Fehlentwicklungen anzuzeigen, sind aber nicht geeignet, um vor einem Überdruck zu warnen, wie er beispielsweise bei einem spontanen und unvorhersehbaren Versagen oder Fehler eines elektronischen Motormanagements auftreten kann.

Druckentlastungseinrichtungen, wie Schmelzpfropfen, Sollbruchstellen oder Berstscheiben werden bekannterweise schon in Niederdruckumgebungen eingesetzt. So zeigt die US-Patentschrift US4, 102, 167 eine Berstscheibe mit einem konvex gekrümmten Sollbruchabschnitt. Weiterhin ist aus dem japanischen Patent JP S 45-037498B ein Sollbruchbauteil bekannt, welches zum Schutz vor einem Blockieren eines Motors einer ins Wasser gefallenen Landmaschine aufgrund von in die Brennkammer eingedrungenen Wassers dient, welches aufgrund seiner Inkompressibilität eine weitere Kolbenbewegung verhindert.

Aus der japanischen Offenlegungsschrift JP 2007-04 65 28 A ist ein Außenbordmotor für ein Rennboot bekannt, welcher ebenfalls mit einem Sollbruchbauteil ausgestattet ist, um beim Kentern des Sportboots in die Brennkammer eindringendes Wasser daran zu hindern, aufgrund seiner Inkompressibilität Schäden am Kolben, Pleuel oder dergleichen anzurichten.

Hiervon ausgehend ist es Aufgabe der vorliegenden Erfindung, einen Zweitakt-Kreuzkopf-Großdieselmotor, insbesondere mit Längsspülung zu schaffen, der im Betrieb ein geringeres Gefährdungspotential bei ebenfalls geringeren Wartungskosten aufweist, sowie ein Verfahren, mit dem Beschädigungen eines solchen Dieselmotors vermieden werden können.

Diese Aufgabe wird hinsichtlich des Zweitakt-Kreuzkopf-Großdieselmotors mit den Merkmalen des Anspruchs 1 gelöst, hinsichtlich des Verfahrens mit den Merkmalen des Anspruchs 27.

Der Zweitakt-Kreuzkopf-Großdieselmotor hat zumindest einer Brennkammer, welche von einem Zylinder mehrseitig umschlossen ist, sowie von zumindest einer Oberseite zumindest eines in dem Zylinder auf- und ab bewegten Kolbens, welche eine Außenwand für die Brennkammer bilden, wobei die Brennkammer an ihrer Außenwand eine Sollbruchstelle aufweist. Es kann also ein Dieselmotor mit einem oder zwei gegeneinander bewegten Kolben sein.

Erfindungsgemäß weist dieser Dieselmotor eine Sollbruchstelle auf, welche geeignet ist, um den Dieselmotor gegen mögliche Beschädigungen zu schützen, welche durch einen unerwünscht großen Überdruck von Gasen in der Brennkammer während einer Fehlfunktion des Dieselmotors hervorgerufen werden können, wobei die Sollbruchstelle einen Sollbruchdruck unterhalb des Überdrucks aufweist, ab dem mit den Beschädigungen gerechnet wird, und oberhalb eines unter normalen Motorbetriebsbedingungen maximal vorgesehenen Brennkammernormaldrucks. Die Sollbruchstelle kann dabei vorteilhaft an einem Sollbruchbauteil ausgebildet sein, welches zum Verschließen eines durch eine Außenwand der Brennkammer des Dieselmotors herausführenden Notabblaskanals vorgesehen ist. Der erfindungsgemäße Dieselmotor weist in der Außenwand der Brennkammer einen mit dem Sollbruchbauteil verschlossenen Notabblaskanal auf, welcher auf der der Brennkammer abgewandten Seite der Sollbruchstelle an eine sichere Aufnahmeumgebung angeschlossen ist, in welche die bei einem Bruch der Sollbruchstelle austretenden Bruchsplitter und bevorzugt auch die dabei austretenden heißen Gase abgeblasen werden können. Dabei wäre es aufgrund des nötigen, großen Volumens zumindest bei Großdieselmotoren wohl nur theoretisch denkbar, einen Notgassammelbehälter als integraler Bestandteil des Sollbruchbauteils vorzusehen, welcher auf der der Brennkammer abgewandten Seite der Sollbruchstelle anschließt, so dass der mit der Sollbruchstelle verschlossene Notabblaskanal bei Bruch der Sollbruchstelle direkt in den Notgassammelbehälter mündet. Geeignet könnte jedoch ein Richtungsweiser für die Gase (um diese in eine unbedenkliche Richtung zu lenken) und oder ein Fangfilter für die abbrechenden Stücke der Sollbruchstelle vorgesehen sein, vorzugsweise einstückig mit dem Sollbruchbauteil. Ein derartiger Richtungsweiser bzw. Fangfilter kann dann entweder zusammen mit dem restlichen Sollbruchbauteil ausgetauscht oder mit einer neuen Sollbruchstelle versehen werden, wenn es zu einer Reparatur des Motors nach Bruch des Sollbruchstelle kommt. Der Fangfilter kann dabei Durchtritte für das austretende heiße Gas aufweisen, die in eine Richtung zeigen, in der das heiße Gas keine Schäden anrichten kann, wobei Bruchstücke mittels Netzen oder Gitter oder dergleichen zurückgehalten werden können.

Alternativ dazu kann auch ein gemeinsamer Notgassammelbehälter für mehrere Sollbruchbauteile vorgesehen sein bzw. an mehrere Sollbruchbauteile angeschlossen sein, der vorzugsweise ein abgeschlossenes Volumen aufweist. Beispielsweise kann bei einem Reihenmotor, bei dem mehrere Zylinder nebeneinander in Reihe angeordnet sind ein länglicher Notgassammelbehälter vorgesehen sein, wobei jeder der Zylinder mit einem Sollbruchbauteil versehen ist, welches dann an den gemeinsamen Notgassammelbehälter angeschlossen ist, so dass der Notabblaskanal bei Bruch der Sollbruchstelle jeweils in den gemeinsamen Notgassammelbehälter mit einem Volumen von bei einem Großdieselmotor beispielsweise 8 m³ mündet.

Gemäß einer alternativen Weiterbildung wird dagegen als sichere Aufnahmeumgebung ein am Motor schon vorhandenes Bauteil genutzt, welches mittels einer auf der Rückseite der Sollbruchstelle an den Notabblaskanal anschließenden Anschlussleitung an den Notabblaskanal angebunden ist. Vorteilhaft kann dieses Bauteil ein mit mehreren der Brennkammern bzw. Zylindern des Dieselmotors verbundener Abgassammelbehälter sein. Denn dort können kaum Beschädigungen durch die austretenden heißen Gase und Bruchstücke angerichtet werden. Bevorzugt sind die Solbruchbauteile dabei jeweils an einer Umfangsposition in dem Zylinderkopf vorgesehen, die dem Abgassammelbehälter zugewandt ist, um eine kurze Anschlussleitung zu ermöglichen. Die Anschlussleitung kann dabei beispielsweise eine außerhalb des Zylinderkopfs verlegte Schlauchleitung sein, welche mit geeigneten Schlauchschellen an entsprechende Rohrstummel an dem Sollbruchbauteil und an dem Abgassammelbehälter angeschlossen ist. Es wäre jedoch ebenfalls denkbar, die Anschlussleitung zumindest teilweise innerhalb des Zylinderkopfs bzw. Zylinderblocks zu verlegen, zumindest wenn als Aufnahmeumgebung ein weiter in den Zylinderkopf integrierter Abschnitt ausgewählt wird, z.B. ein Auslasskanal stromab des Auslassventils, welches sich bei längsgespülten Kreuzkopfmotoren oft als einziges Ventil zentral auf der Oberseite des Zylinderkopfs bzw. auf dessen Deckel befindet.

Mit einem derartigen Dieselmotor und einem entsprechenden Sollbruchbauteil, welche die Sollbruchstelle umfasst, kann ferner das erfindungsgemäße Verfahren zum Vermeiden von Beschädigungen eines Zweitakt-Kreuzkopf-Großdieselmotors umgesetzt werden, welches sich dadurch auszeichnet, dass zum Verhindern von Beschädigungen, welche durch einen unerwünscht großen Überdruck von Gasen in einer Brennkammer während einer Fehlfunktion des Dieselmotors auftreten können, zumindest ein erfindungsgemäßes Sollbruchbauteil in der Außenwand zumindest einer Brennkammer vorgesehen wird und/oder der erfindungsgemäß aufgebaute Dieselmotor verwendet wird.

Vorteilhaft gelingt es damit, die eingangs beschriebenen Beschädigungen beim Gasaustritt zwischen Zylinder und Zylinderkopf zuverlässig zu verhindern, aber auch mögliche Verformungen innerer Teile, welche ebenfalls durch einen destruktiven Verbrennungsüberdruck in der Brennkammer hervorgerufen werden können, wie z.B. ein Verbiegen der Kolbenstange, der Kreuzkopfelemente oder der Pleuelstange, sowie teilweise auftretende Versetzungen in Schrumpfverbindungen an der Kurbelwelle etc.. Denn bevor sich ein derartig zerstörerischer Überdruck aufbauen kann, bricht die Sollbruchstelle, wodurch ein weiterer Druckanstieg zumindest im wesentlichen verhindert wird, da einem weiteren Druckaufbau in der Brennkammer aufgrund fortgesetzter Verbrennung von eingespritztem Treibstoff und eventuell weiterer Kompression durch den Druckabfall an der zerbrochenen Sollbruchstelle entgegengewirkt wird. Der Bruch der Sollbruchstelle ist dabei hinnehmbar und den vorstehend beschriebenen, ansonsten zu erwartenden schweren Beschädigungen klar vorzuziehen, weil es lediglich eine viel billigere und einfach durchzuführende Reparatur einer im Voraus genau definierten Schädigung handelt.

Dabei können Sollbruchstellen mit einem sehr genau in engen Grenzen definierten Sollbruchdruck gefertigt werden. Es gelingt somit im gesamten in der Brennkammer auftretenden Temperaturbereich, das heißt bei warmem Motor ebenso wie bei kaltem Motor, den Sollbruchdruck größer als einen Schwellwert und niedriger als einen Grenzdruck zu halten, wobei der Schwelldruck größer als ein unter normalen Motorbetriebsbedingungen maximal auftretender verdichtungs- bzw. verbrennungsverursachter Brennkammernormaldruck ist und der Grenzdruck niedriger als ein niedrigster Überdruck, ab dem mit den Beschädigungen am Motor zu rechnen ist. Somit arbeitet die Sicherungsvorrichtung der vorliegenden Erfindung in jedem Motorbetriebszustand, also sowohl im Voll- als auch im Teillastbetrieb auf die gewünschte Weise.

Um einem Ermüdungsbruch der Sollbruchstelle vorzubeugen kann ferner eine Lebensdauer der Sollbruchstelle ermittelt bzw. vorgegeben werden, innerhalb der sicher damit gerechnet werden kann, dass der Sollbruchdruck größer als der Schwelldruck und niedriger als der Grenzdruck ist.

Vorteilhaft kann die Sollbruchstelle dabei an einem ringförmig um einen Sollbruchplattenabschnitt umlaufenden Rand ausgebildet sein, wobei der Rand im Vergleich zur umgebenden Außenwand dünnwandig und zur Brennkammer hin konvex gewölbt ist.

Die Sollbruchstelle bzw. der mit dem Sollbruchbauteil vorgesehene Notabblaskanal könnte dabei an der der Brennkammer zugewandten Kolbenoberfläche vorgesehen sein. Ebenso denkbar wäre dafür jede Stelle des Zylinders. Bei Motoren mit Zylindern, welche eine endseitig mit einem Zylinderkopf verschlossene Zylinderbuchse aufweisen, ist es jedoch vorteilhaft, wenn die Sollbruchstelle und vorzugsweise der aus der Brennkammer herausführende, mit dem Sollbruchbauteil verschlossene Notabblaskanal an dem Zylinderkopf vorgesehen ist. Bei Zylindern gattungsgemäßer Großmotoren sind normalerweise der Tellersitz und der Antrieb des Auslassventils in einer einfach ersetzbaren, kompakten Spezialbaugruppe eingebaut. Ein Notabblasventil ist in der Spezialbaugruppe im Normalfall nicht vorgesehen. Vorzugsweise ist das Sollbruchbauteil leicht zugänglich und kann am Ende seiner Lebensdauer - zerbrochen oder nicht - auf einfache Weise ausgetauscht werden. Auch eine Reparatur eines Zweitakt-Kreuzkopf-Großdieselmotors, bei dem eine einstückig mit dem Zylinderkopf vorgesehene Sollbruchstelle gebrochen ist, fällt dann relativ leicht, so dass der Motor nur für kurze Zeit außer Betrieb genommen werden muss bzw., im Falle von einzeln abschaltbaren Zylindern, sogar auf den anderen Zylindern weiterlaufen kann. Theoretisch wäre jedoch auch eine einstückige Sollbruchstelle in der Außenwand der Brennkammer denkbar.

Dabei ist es weiterhin vorteilhaft, wenn das Sollbruchbauteil von außen her am Motor befestigt werden kann, um den Notabblaskanal abzudichten. Dazu kann das Sollbruchbauteil als eine Art Stopfen ausgebildet sein, um den Notabblaskanal zu verstopfen oder als von außen her oberhalb des Notabblaskanals aufschraubbarer Deckel. Es wäre jedoch ebenfalls denkbar, die Sicherungsvorrichtung als selbst sicherndes Bauteil auszubilden, welches von der Brennkammerinnenseite her in den Notabblaskanal einführbar ist. Ein solches Sollbruchbauteil könnte durch einen Spülkanalanschluss am Zylindergrund eingeführt werden, wenn der Kolben sich in einer Stellung nahe des unteren Totpunkts befindet oder durch eine eigens dafür angebrachte Bohrung, z.B: den Notabblaskanal selbst, wenn dieser eine geeignete, z.B. ovale Form aufweist und das Sollbruchbauteil in zur Einsatzstellung verdrehter Stellung durch den Notabblaskanal geführt wird.

Eine weitere bevorzugte Ausführungsform der Sicherungsvorrichtung als separates Sollbruchbauteil könnte einen zylindrischen Hülsenabschnitt umfassen, mit dem der Notabblaskanal in der Außenwand der Brennkammer verstopft wird, sowie einen zusätzlichen Deckelabschnitt nach Art eines Schraubenkopfs, welcher an seiner der Außenwand zugewandten Unterseite abdichtend auf einer entsprechenden Dichtfläche aufliegt.

Das Sollbruchbauteil kann dabei eine zwischen zwei Spannflansche geklemmte Sollbruchscheibe mit der Sollbruchstelle umfassen oder einen um die Sollbruchstelle umlaufenden Trägerabschnitt, welcher einstückig mit dem Sollbruchplattenabschnitt ausgeformt ist. Alternativ dazu könnte das Sollbruchbauteil auch lediglich eine Spanneinrichtung umfassen, mit dem die Sollbruchscheibe beispielsweise über lediglich einen Spannflansch gegen eine am Motor vorgesehene Spannfläche gespannt wird.

Wenn das Sollbruchbauteil als Deckel oder mit einem Deckelabschnitt ausgebildet ist, welcher einen ringförmig um den Notabblaskanal umlaufenden Randflansch aufweist, vorzugsweise mit einer ebenen, zur Brennkammer hin gewandten Dichtfläche, kann es mittels den Randflansch durchdringenden Schraubbolzen am Motor, vorzugsweise am Deckel des Zylinderkopfs befestigt werden, wobei zwischen die Dichtfläche am Zylinderkopf und die Dichtfläche am Deckelflansch eine zusätzliche Dichtung eingelegt werden kann, wenn dies nötig sein sollte. Der Randflansch des Deckels kann dabei gleichzeitig als Spannflansch zum Verspannen der Sollbruchscheibe gegen die Dichtfläche am Motor dienen, welche wiederum gleichzeitig als Dichtring dienen kann.

Wenn das Sollbruchbauteil dagegen als den Notabblaskanal verstopfende Hülse ausgebildet ist oder alternativ oder ergänzend zu dem Deckel bzw. Deckelabschnitt bzw. der Spanneinrichtung einen in den Notabblaskanal einführbaren Hülsenabschnitt aufweist, kann die Hülse bzw. der Hülsenabschnitt mit einem Außenumfangsgewinde versehen sein und der Notabblaskanal mit einem entsprechenden Innenumfangsgewinde, um das Sollbruchbauteil im Notabblaskanal zu befestigen.

Dabei kann die Innenoberfläche des Sollbruchbauteils bzw. seine der Brennkammer zugewandte Stirnseite eine solche Form aufweisen, dass die Stirnseite des Sollbruchbauteils und die daran anschließende Innenoberfläche der Brennkammeraußenwand bündig sind, wenn sich das Sollbruchbauteil in Einsatzstellung befindet. Dadurch kann vermieden werden, dass die an der Innenseite der Außenwand den Notabblaskanal umgebenden Kanten des Zylinderkopfs durch lokale Temperaturkonzentrationen abbrennen oder schmelzen. Weiterhin vorteilhaft in diesem Sinne wäre es, wenn der Zylinderkopf auf der Innenseite der Außenwand der Brennkammer um den Notabblaskanal herum angefast oder verrundet ist, so dass das Sollbruchbauteil nicht bis ganz an den Innenrand der Brennkammer in den Notabblaskanal eingeführt werden muss und trotzdem ein bündiger Abschluss mit der Innenseite der Brennkammeraußenwand gebildet werden kann.

Besonders vorteilhaft bei Sollbruchbauteilen mit einer in Einsatzstellung bündig mit der Innenseite der Außenwand der Brennkammer verlaufenden Stirnseite ist es dabei, wenn Einrichtungen vorgesehen sind, um eine korrekte Drehposition des als Stopfen ausgebildeten Sollbruchbauteils sicherzustellen. Denn dann kann ein ansonsten zylindrischer Stopfen, welcher lediglich eine speziell geformte Nase an seiner Stirnseite trägt, um mit der umgebenden Innenseite der Brennkammeraußenwand bündig abzuschließen (beispielsweise bei einem schrägen Verlauf des Notabblaskanals gegenüber der Innenoberfläche der Brennkammeraußenwand) sicher in die richtige Einsatzstellung gebracht werden. Um zu verhindern, dass die Spitze eines solchen Nasenanbaus frei in die Brennkammer hineinragt und in dieser falschen Drehposition leicht wegschmilzt oder die entsprechenden Bereiche auf der Innenseite der Brennkammeraußenwand wegen der Abwesenheit der passenden Bereiche des Nasenanbaus wegschmelzen, kann beispielsweise ein geeignetes, nichtsymmetrisches Muster von Einschraubbohrungen für entsprechende Schrauben vorgesehen sein. Eine andere Möglichkeit wäre eine genau abgestimmte Innengewindelänge in dem Notabblaskanal bzw. Außengewindelänge am Hülsenabschnitt eines stopfenartigen Sollbruchbauteils, welches an seiner Innenseite den vorstehend beschriebenen nasenförmigen Anbau zur bündigen Anlage an der Innenseite der Brennkammeraußenwand aufweist und/oder entsprechende Markierungslinien am brennkammerfernen Ende des Sollbruchbauteils oder am Umfang seines Schraubenkopfes und am umliegenden Bereich auf der Außenseite der Brennkammeraußenwand. Ebenfalls denkbar wäre es, die Einschraubtiefe des Sollbruchbauteils dadurch festzulegen, dass das Sollbruchbauteil einen schraubenkopfartigen Flansch aufweist, mit welchem es an eine entsprechende Anlagefläche am Zylinderkopf bzw. einen eingeschobenen Dichtring anschlägt, wenn der die innenseitige Stirnwand des Sollbruchbauteils bildende Nasenaufbau in bündiger Anlage mit der Innenseite der Brennkammeraußenwand ist.

Besonders bei derartigen, als einschraubbare Berststopfen ausgebildeten Sollbruchbauteilen kann die von der Brennkammer weg gewandte Oberfläche des Sollbruchbauteils ferner eine Aufnahmeöffnung für ein speziell profiliertes Werkzeug aufweisen, um den Stopfen auf seine korrekte Lage im Notabblaskanal und/oder sein korrektes Anzugsmoment anziehen zu können. Dabei kann die Werkzeugaufnahmeöffnung in einem Abschnitt des Sollbruchbauteils vorgesehen sein, welcher nach Erreichen des korrekten Anzugsmoments abbricht, so dass sichergestellt ist, dass das Sollbruchbauteil nur einmal montiert werden kann. Dass Sollbruchbauteil kann dabei beispielsweise so ausgebildet sein, dass nach dem Entfernen des Werkzeugs und des abgebrochenen Abschnitts mit der Aufnahmeöffnung eine nach außen gerichtete, keilförmige Struktur übrig bleibt, welche den Angriff eines Drehmoments lediglich in Öffnungsrichtung des Sollbruchbauteils erlau bt.

Die vorstehend genannten Merkmale zum Sicherstellen der korrekten Drehposition bzw. des korrekten Anzugsmoments können im übrigen auch dafür genutzt werden, um bei baugleich in unterschiedlichen Motorbaureihen mit unterschiedlicher kraftmechanischer Auslegung und/oder Verbrennungsdruckverhältnissen eingesetzte, unterschiedliche Sollbruchbauteile zu unterscheiden, etwa mittels geeigneter, voreingeschraubter Blockiermittel, welche es verhindern oder es zumindest anzeigen, dass z.B. ein zu langer Berststopfen eingeschraubt wird.

Alternativ zu der Ausführungsform des stopfenartigen Sollbruchbauteils mit zur Innenseite der Außenwand bündigen Stirnfläche kann sich dessen nach innen gerichtete Stirnfläche auch nicht in bündiger Anlage mit der Innenseite der Brennkammeraußenwand, sondern in einer etwas in die Wand hinein zurückgezogenen Position befinden. Dadurch ist das Sollbruchbauteil durch die umgebende Außenwand etwas vor der durch die Verbrennung in der Brennkammer erzeugte Strahlungswärme abgeschirmt.

Vorteilhaft in diesem Sinne kann das Sollbruchbauteil jedoch auch eine Hitze- und/oder Korrosionsschutzschicht umfassen, mit der es auf seiner Brennkammer zugewandten Oberfläche gegen die Strahlungswärme in der Brennkammer und auch gegen chemische Zersetzungsprozesse aufgrund der aggressiven Abgase in der Brennkammer abgeschirmt ist. Eine solche Schicht könnte beispielsweise eine Beschichtung der ringförmigen Hülsenstirnwand, aber auch der in der Hülse angeordneten Sollbruchscheibe, aus einer hitzebeständigen Legierung sein, wobei sich Nickellegierungen als besonders widerstandfähig gegen Gemischezersetzung aufgrund der Verbrennung in Motoren gezeigt hat. Aber auch eine keramische Isolierschicht wäre denkbar. Es wäre ebenfalls denkbar, die Sollbruchscheibe aus einem hitzebeständigen und den gewünschten Sollbrucheigenschaften aufweisenden Material auszubilden, z.B. ebenfalls aus Keramik, insbesondere, wenn diese als Dichtring die Motoraußenseite vor der Brennkammerhitze abschirmt.

Eine weitere Möglichkeit wäre es, der Brennkammer und dem Solbruchbauteil ein druckdurchlässiges Hitzeschutzmaterial als Hitzeschutzschicht zwischenzuordnen, welches sich am brennkammerseitigen Ausgang des Notabblaskanal befinden und den Notabblaskanal dann vollständig ausfüllen kann, solange die Funktion des Sollbruchbauteils, bei Überdruck zu brechen, nicht behindert wird. Ein solches Hitzeschutzmaterial bzw. eine solche Hitzeschutzschicht kann an das Sollbruchbauteil angeformt oder -geklebt oder dergleichen sein, oder als eigenes Bauteil ausgeführt sein. Beispielsweise könnte das Hitzeschutzmaterial ein poröser Festkörper, wie beispielsweise ein Metallschaum sein, welcher die Sollbruchstelle gegen die Strahlungswärme in der Brennkammer isoliert, oder auch ein Metallfadengeflecht bzw. eine Metallwolle, welches von der Brennkammer ausgehende Strahlungswärme absorbiert und an die um die Notabblaskanal herum angeordneten Bereiche der Brennkammeraußenwand abgibt. Ebenfalls denkbar wäre der Einsatz von Keramik oder eine Kombination aus Metall und Keramik als Hitzeschutzmaterial. Beim Bruch bzw. Bersten der Solbruchstelle wird ein derartiges Hitzeschutzmaterial im Normalfall zusammen mit Stücken des Sollbruchbauteils aus dem Notabblaskanal herausgeschleudert.

Weiterhin kann auch eine aktive Kühlung des Sollbruchbauteils bzw. der Sollbruchstelle über die Zufuhr eines Kühlmittels vorgesehen sein. Dazu kann vorteilhaft eine Spüleinrichtung zum Bespülen der der Brennkammer abgewandten Seite der Sollbruchstelle bzw. des Sollbruchplattenabschnitts mit einem Kühlmittel, insbesondere mit Kühlwasser oder -gas, dienen.

Das aktive Kühlsystem kann dabei insbesondere bei der Verwendung eines ungiftigen Gases, wie z.B. der dem Zylinder zugeführten Ladeluft als offenes System ausgebildet sein und eine entsprechende Kühlmittelzufuhrleitung plus gegebenfalls einer Pumpe als Spüleinrichtung aufweisen.

Auch das aus dem Zylinder kommende, feuchte Abgas eignet sich als Kühlmittel. Ebenso könnte Kühlwasser als Kühlmittel eingesetzt werden. In beiden Fällen kann das Kühlsystem als geschlossenes System ausgebildet sein, wobei neben der Kühlmittelzufuhrleitung eine zu einer ungefährlichen Stelle in der Umgebung oder zu einer entsprechenden Stelle im Abgaskanal (z.B. in der Nähe eines Einlasses eines Kompressors) bzw. zu einem Wasserbehälter führende Kühlmittelabfuhrleitung vorgesehen ist. Die optionale Pumpe kann dann auch als Saugpumpe auf der Abfuhrseite vorgesehen sein.

Dabei kann auf der im eingebauten Zustand der Brennkammer abgewandten Seite des Sollbruchplattenabschnitts eine Zusatzblende in dem Notabblaskanal vorgesehen sein, welche zusammen mit dem Sollbruchplattenabschnitt eine vorzugsweise gegenüber der Wand des Notabblaskanals gegen Kühlmittelaustritt abgedichtete Kühlkammer begrenzt. Um dabei die Funktion der Sollbruchstelle sicherzustellen sollte die die Zusatzblende einen gegenüber dem Sollbruchdruck der Sollbruchstelle wesentlich geringeren Sollbruchdruck von beispielsweise einigen Bar aufweisen. Vorteilhaft kann dabei ferner eine Drosseleinrichtung vorgesehen sein, über welche im Ansprechen auf einen Bruch der Sollbruchstelle oder das Erreichen eines bestimmten Drucks in der Brennkammer (z.B. des Schwelldrucks) die Kühlmittelzufuhr drosselbar ist, so dass dann die Kühlmittelzufuhr insbesondere bei Einsatz von Flüssigkeiten als Kühlmittel auf ein Niveau begrenzt wird, welches für die Bauteile in der dann durch den Notabblaskanal zugänglichen Brennkammer unschädlich ist.

Weitere Möglichkeiten, das Sollbruchbauteil vor der Strahlungshitze in der Brennkammer abzuschirmen bestehen beispielsweise darin, den Notabblaskanal brennkammerseitig mit einem Knick oder einer Krümmung auszuformen, um das Sollbruchbauteil hinter der Krümmung anzuordnen. Weiterhin könnte der Durchmesser des Notabblaskanal in einem Abschnitt zwischen der Innenoberfläche der Brennkammeraußenwand und der der Brennkammer zugewandten Stirnfläche des Sollbruchbauteils mit einer etwas kleineren lichten Weite als im weiter außen gelegenen, vom Sollbruchbauteil verstopften Abschnitt, versehen sein.

Ebenfalls denkbar wäre es, das gesamte Sollbruchbauteil aus einem entsprechend hitzebeständigen Material zu fertigen, so dass kein Versagen unterhalb des gewünschten Sollbruchdrucks erfolgt, auch wenn kein Hitzeschutzmaterial oder keine Hitzeschutzbeschichtung am Sollbruchbauteil vorgesehen ist. Dieses Material müsste jedoch auch die ansonsten erforderlichen Eigenschaften aufweisen, wie z.B. den erforderlichen Sollbruchdruck innerhalb enger Toleranzen, bei möglichst niedrigen Gestehungskosten.

Dabei muss jedoch berücksichtigt werden, dass in gattungsgemäßen Zweitakt-Kreuzkopf-Großdieselmotoren mit Längsspülung zum Zündzeitpunkt Temperaturen von bis zu 2000°C auftreten, welche nach dem Hochlaufen des Motors zu einer Erwärmung des Materials in der Zylinderkopfaußenwand von lediglich 70° bis 80°C führen, welches ja per Kühlsystem auf diesem niedrigen Temperaturniveau gehalten wird. Sollte das Sollbruchbauteil bzw. die Sollbruchstelle ohne zusätzliche Schutzmaßnahmen der direkten Strahlungswärme in der Brennkammer ausgesetzt sein hat sich bei einem Versuchsmotor mit einem deckelartigen, außen auf dem Zylinderkopf angeordneten Sollbruchelement bzw. -bauteil die Sollbruch- bzw. Berstplatte auf immerhin 450°C erwärmt, und zwar ausgehend von der niedrigen Temperatur vor dem Hochfahren des Motors und unter dauernd welchselnder Temperaturbelastung während des Verbrennungszyklus. Wird es jedoch lediglich oder hauptsächlich der Wärmekonduktion in der Wand ausgesetzt, erwärmt es sich auch lediglich auf die Wandtemperatur von 70° C -80°C. Auch eine kontrolliert zwangsgekühlte Gestaltung des Sollbruchbauteils wäre vorstellbar.

Um unnötige Stillstandszeiten oder Austausche des Sollbruchbauteils zu vermeiden müssen in jedem Fall entsprechende Maßnahmen getroffen sein, dass die Sollbruchstelle einen Sollbruchdruck aufweist, der bei jeder Temperatur zu jeder Zeit im Motorverbrennungszyklus bzw. unter normalen Motorbetriebsbedingungen und zwar vom Hochfahren des Motors bis zum Erreichen der Betriebstemperatur des Motors größer als Schwelldruck und niedriger als ein Grenzdruck ist, wobei der Schwelldruck größer als ein unter den normalen Motorbetriebsbedingungen maximal auftretender Brennkammer-Normaldruck bei der entsprechenden Temperatur ist und der Grenzdruck niedriger als ein niedrigster Überdruck bei der Temperatur ist, ab dem mit den Beschädigungen am Motor zu rechnen ist.

Vorzugsweise sollte das Sollbruchbauteil bzw. die die Sollbruchstelle aufnehmende Umgebung am Motor so gestaltet sein, dass auch noch eine gewisse Sicherheit vorhanden ist, also so, dass der Schwelldruck zumindest um einen Auslösedruckbetrag höher als der unter normalen Motorbetriebsbedingungen maximal auftretende Brennkammerdruck liegt und/oder der Grenzdruck zumindest um einen Sicherheitsdruckbetrag niedriger als der niedrigste Überdruck, bei dem mit den Motorbeschädigungen zu rechnen ist.

Beispielsweise könnte als Auslösedruckbetrag ein Wert von 10% des unter normalen Motorbetriebsbedingungen maximal auftretenden Brennkammernormaldrucks vorgesehen sein. Da der Druck, bei dem sich die zum Verschrauben von Zylinderbuchse und Zylinderkopf verwendeten Zylinderbolzen soweit längen, dass der Zylinderkopf abhebt, stark von der Bolzentemperatur und diese wiederum von der dynamischen Wandtemperatur abhängt, und daher nicht immer genau definiert ist, sollte der Wert für den niedrigsten Überdruck eng ausgewählt werden. Beispielsweise könnte als Grenzdruck (entspricht einem niedrigsten Überdruck abzüglich des Sicherheitsdruckbetrags) ein Wert von 20% über dem als maximal auftretenden Brennkammernormaldruck kalkulierten Wert angenommen werden. Es ist klar, dass weder der niedrigste Überdruck, noch der maximale Brennkammernormaldruck tatsächlich genau den Druckwerten entsprechen müssen, an denen der Motor gerade noch beschädigungsfrei läuft oder an denen er gerade explodiert. Vielmehr kann es sich dabei auch um hypothetische Werte handeln, solange sichergestellt ist, dass die angenommenen Werte sicher sind, oder um in Versuchen ermittelte Werte für den maximal auftretenden Brennkammernormaldruck und einen in Abhängigkeit davon als sicher eingeschätzten Wert für den niedrigsten Überdruck.

Bei Versuchen an einem gängigen Zweitakt-Kreuzkopf-Großdieselmotor der gattungsgemäßen Art liegt der Brennkammernormaldruck beispielsweise bei 160 bar bis 200 bar, wobei es bei provozierten Fehlern in der Einspritzsteuerung und daraus resultierenden falschen Zündbedingungen zu Zylinderdrücken von bis zu 600 bar kommen kann, welche häufig das eingangs beschriebene Abheben des Zylinderkopfs aufgrund einer Längung der Zylinderbolzen hervorrufen. Unter diesen Bedingungen hat sich beispielsweise ein unterer Schwelldruck von 220 bar und ein oberer Grenzdruck von 250 bar als geeignete Toleranzen für den Sollbruchdruck erwiesen.

Eine weitere vorteilhafte Weiterbildung betrifft eine Markierung des Sollbruchbauteils, welche Angaben über den Sollbruchdruck bzw. Toleranzen für den Sollbruckdruck und/oder die vorgesehene Lebensdauer etc. enthalten kann. Weiterhin kann dort angegeben werden, für welche Motorbaureihe das Sollbruchbauteil vorgesehen ist, sowie weitere Betriebs- und Sicherheitsparameter angegeben werden, z.B. zulässiger Temperaturbereich etc. Auf diese Weise kann sichergestellt werden, dass das Sollbruchbauteil nur an den Motoren eingesetzt wird, für welches es auch zugelassen ist und dass es innerhalb geeigneter Wartungsintervalle ausgetauscht wird. Dadurch kann der mit dem Sollbruchbauteil ausgestattete Motor auch z.B. von großen Schiffsversicherern in bestimmte Risikoklassen einklassifiziert werden, welche bisher das, wie eingangs beschrieben, häufig wirkungslose Sicherheitsventil vorschreiben. Wenn ferner eine eindeutige Teilenummer in der Markierung enthalten ist, kann die individuelle Historie jedes einzelnen Sollbruchbauteils überwacht werden.

Besonders vorteilhaft ist es dabei, wenn die Markierung von außen her ablesbar ist, so dass das Sollbruchbauteil auch im eingebauten Zustand überwacht werden kann. Falls auf dem Sollbruchbauteil nicht genügend Platz für eine Markierung durch Eingravieren, Ätzen, Aufstempeln oder ähnliches sein sollte, wäre es ebenfalls denkbar, das Sollbruchbauteil mit einem elektronischen Datenträger zu versehen und die Markierung auf dem elektronischen Datenträger abzulegen. Der elektronische Datenträger könnte dazu z.B. durch eine ebenfalls am Sollbruchbauteil anbaubare Funkeinheit nach Art eines RFID-Chips, von außen her elektronisch auslesbar sein. Auch ein redundante Markierung auf einem elektronischen Datenträger oder das Aufspielen von Betriebsdaten des Motors und damit einer Teilehistorie auf den elektronischen Datenträger wäre denkbar, z.B. die Einsatzdauer seit der letzten Inspektion etc., wobei die Markierung bzw. Information auf dem elektronischen Datenträger mit geeigneten Verschlüsselungsmethoden gegen Manipulationen geschützt sein könnte. Ferner könnte auf dem Datenträger Parameter oder ein Programm zur Berechnung der Lebensdauer des Sollbruchbauteils abgelegt sein, welche in die Motorsteuerung des Dieselmotors eingelesen werden können. Dabei wäre allerdings sicherzustellen, dass der elektronische Datenträger gegen zu hohe Temperaturen geschützt ist und daher in einem relativ kühlen oder wärmeisolierten Bereich des Sollbruchbauteils angeordnet wird.

Es wäre ebenfalls denkbar, das Sollbruchbauteil mit zusätzlichen Mess- oder Steuereinrichtungen auszustatten, beispielsweise zur Überwachung der Temperatur des elektronischen Datenspeichers oder um den Verbrennungsdruck zu überwachen, um so schon vor einem Bruch des Sollbruchbauteils Entwicklungen zu erkennen, die zu einem fehlerhaften Ansteigen des Drucks in der Brennkammer führen können. Ferner wäre es denkbar, den elektronischen Datenträger über ein geeignetes Auslesegerät und auch die zusätzliche Messeinrichtung an die Steuerung des Motors anzuschließen bzw. die Motorsteuerung entsprechend einzurichten, dass dies möglich ist. Dabei kann die Motorsteuerung dazu verwendet werden, im Ansprechen auf Signale vom Sollbruchbauteil Alarm- oder Warnmeldungen auszugeben oder sogar die Motorsteuerung abzustellen.

Weiterhin wäre es denkbar, aus durch die Motorsteuerung gewonnenen Daten bzw. in der Motorsteuerung gesammelten Daten bezüglich der über die Einsatzdauer aufintegrierten Druck- und Temperaturwerte in der Brennkammer o.ä. die Lebensdauer des Sollbruchbauteils abzuschätzen oder die Lebensdauer durch die mittels der am Sollbruchbauteil vorgesehenen Messeinrichtungen erfassten und über die Einsatzdauer des Sollbruchbauteils aufintegrierten Werte, wie beispielsweise die Anzahl von Druckspitzen über ein als sicher eingeschätztes Niveau hinaus etc.

Vorzugsweise wird für das Sollbruchbauteil oder zumindest dessen die Sollbruchstelle enthaltenden Abschnitt ein Materialgemisch verwendet, welche eine Anzahl verschiedener Materialkomponenten aufweist. Ein kombiniertes Konzentrationsprofil der reinen Komponenten und/oder anderer Komponenten, welches als Kombination von niedrigen Einzelkonzentrationen von puren Metallen oder anderen puren Stoffen erfassbar ist, kann dann verwendet werden, um das Sollbruchbauteilmaterial zu identifizieren. Aus Sicherheitsgründen kann dann ein Sollbruchbauteil mit einem anderen kombinierten Konzentrationsprofil als "nicht original" zurückgewiesen werden, da sein Material möglicherweise nicht die gewünschte Funktion in Bezug auf den Bruch bei festgelegten Druck- und Temperaturparametern erfüllt oder nicht die gewünschte Lebensdauer aufweist.

Weitere vorteilhafte Maßnahmen sind Gegenstand der weiteren Unteransprüche. Die vorstehend beschriebenen Merkmale und die nachstehend noch zu erläuternden Merkmale lassen sich dabei im Rahmen der Erfindung beliebig kombinieren, soweit dies sinnvoll erscheint.

Im Folgenden sollen einzelne Ausführungsformen der Erfindung anhand der beiliegenden Zeichnungen näher erläutert werden. Es zeigen:
- Figur 1: eine Teilschnittansicht eines Zylinderkopfs eines Großdieselmotors gemäß einer Ausführungsform der Erfindung;
- Figur 2: eine der Figur 1 entsprechende Ansicht gemäß einer weiteren Ausführungsform der Erfindung;
- Figur 3: eine der vorhergehenden Figuren entsprechende Ansicht einer weiteren Ausführungsform der Erfindung;
- Figur 4: eine perspektivische Ansicht eines Zylinderkopfs gemäß einer weiteren Ausführungsform der Erfindung;
- Figur 5: eine detaillierte Ansicht des in den Ausführungsformen gemäß der Figuren 1 und 2 eingesetzten Sollbruchbauteils;
- Figur 6: ein Sollbruchbauteil gemäß einer alternativen Ausführungsform der Erfindung; und
- Figur 7: ein Schaubild, auf dem Druckwerte über der Brennkammer-temperatur eingezeichnet sind;

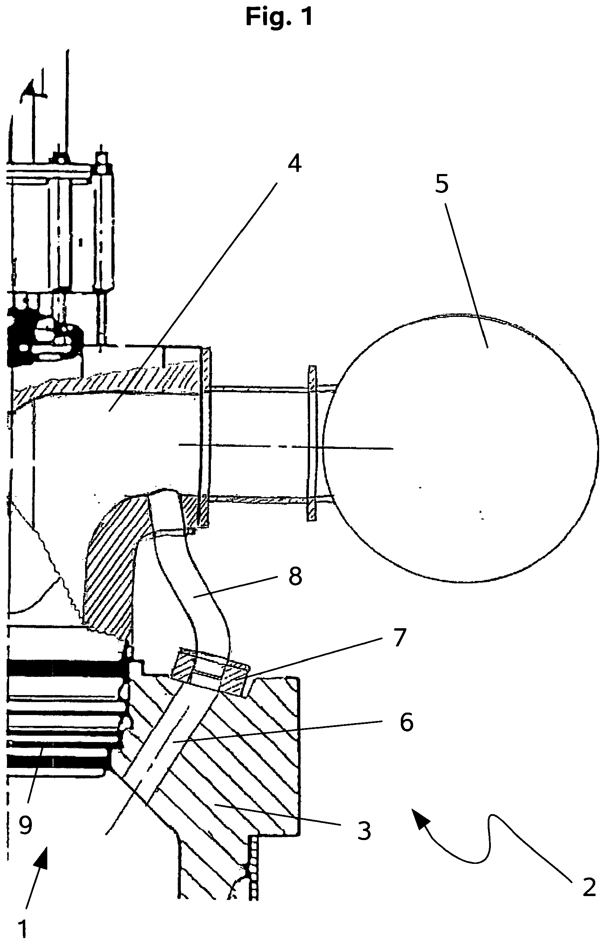

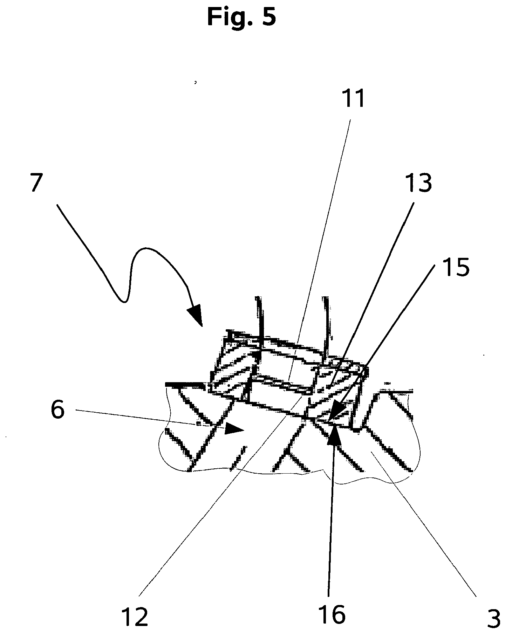

Zunächst wird Bezug genommen auf die Figur 1. In der dortigen Teilschnittansicht ist ein Teil einer Brennkammer 1 eines Dieselmotors gezeigt, welche nach oben hin von einem mit 2 bezeichneten Zylinderkopf bzw. dessen Außenwand 3 und einem zentralen Auslassventil 9 umgrenzt wird. Hinter, bzw. stromabwärts von dem Auslassventil 9 schließt ein Auslasskanal 4 an, durch den die Verbrennungsgase normalerweise einem Abgassammelbehälter 5 zugeführt werden, welcher, wie bei Großdieselmotoren der gattungsgemäßen Art üblich, an alle der in Reihe geschalteten (nicht dargestellten) Zylinder angebunden ist. Aus der Brennkammer 1 führt ein Notabblaskanal 6 heraus, welcher mit einem von außen her auf die Zylinderkopfwand 3 bzw. Brennkammeraußenwand 3 aufgesetzten Sollbruchbauteil 7 verschlossen ist. Der Notabblaskanal 6 ist über eine auf der Rückseite des Sollbruchbauteils 7 anschließende Anschlussleitung 8 mit dem Auslasskanal 4 verbunden. Wird am Sollbruchbauteil 7 der Sollbruchdruck erreicht, und kommt es dementsprechend zu einem Bruch einer Sollbruchstelle 12, welche hier im separaten Sollbruchbauteil 7 ausgebildet ist, wie in Verbindung mit Figur 5 noch näher erläutert werden wird, so werden die aus der Brennkammer 1 austretenden heißen Gase und Bruchstücke über die Anschlussleitung 8 in den stromauf des Auslassventils 9 gelegenen Auslasskanal 4 abgeleitet.

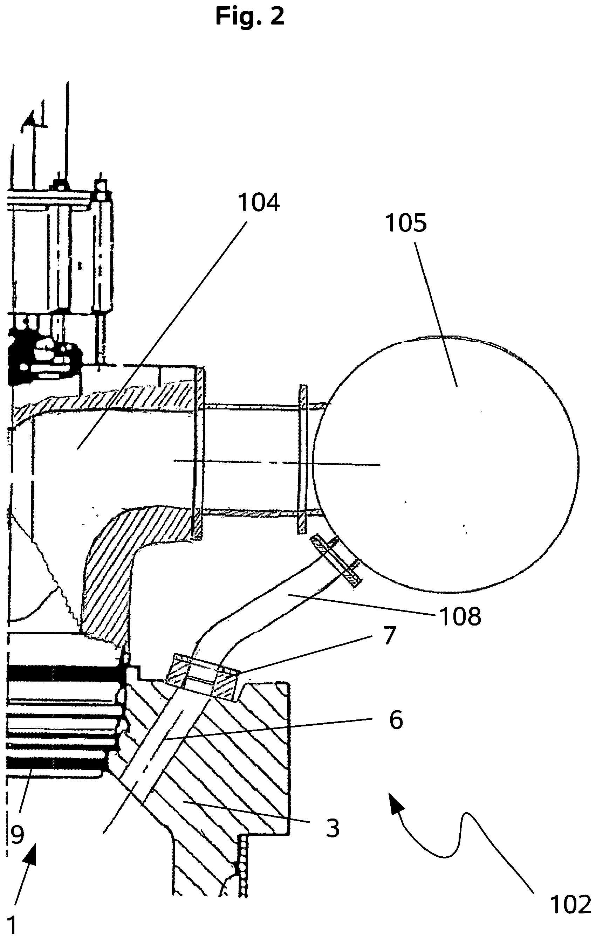

In Figur 2 ist eine alternative Ausführungsform eines Zylinderkopfs 102 schematisch dargestellt, welcher sich von der in Figur 1 dargestellten Ausführungsform dadurch unterscheidet, dass hier eine Anschlussleitung 108 vorgesehen ist, welche einen Abgassammelbehälter 105 an das Sollbruchbauteil 107 mit der Sollbruchstelle anbindet, anstatt einen Auslasskanal 104 (Figur 1).

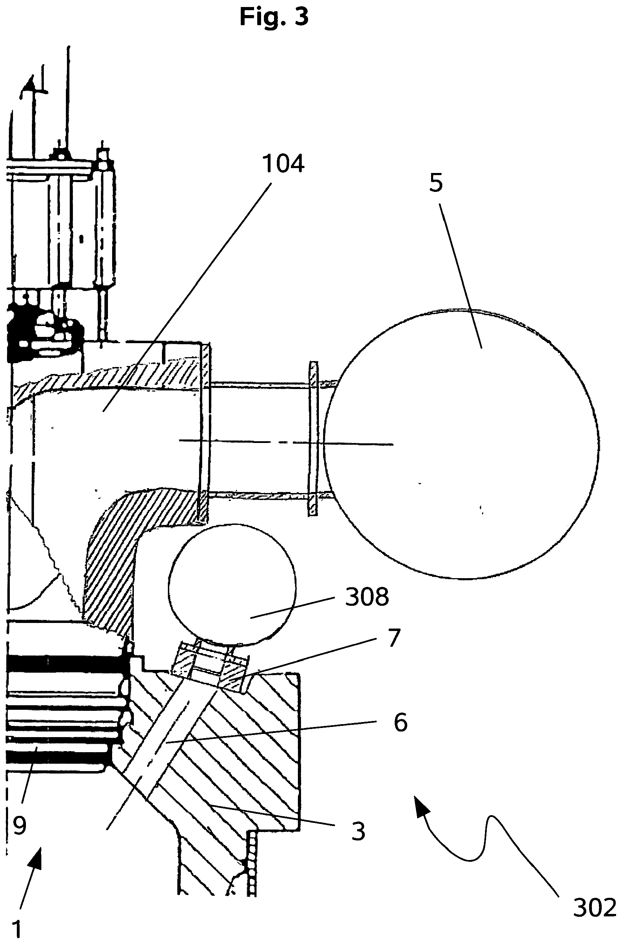

Figur 3 zeigt ebenfalls schematisch eine weitere alternative Ausführungsform eines mit 302 bezeichneten Zylinderkopfs, welche sich von den Ausführungsformen der beiden zuvor genannten Figuren dadurch unterscheidet, dass der Notabblaskanal 6 über das Sollbruchbauteil 7 direkt mit einem separaten Notgassammelbehälter 308 verbunden ist, welcher an allen in Reihe angeordneten Zylindern des Motors am jeweiligen Sollbruchbauteil 7 angeschlossen ist und bei Bruch der Sollbruchstelle sowohl heiße Gase als auch Bruchstücke aufnimmt. Dabei kann der Notgassammelbehälter 308 trotz seinem relativ kleinen Durchmesser wegen seiner wesentlichen Länge eine ausreichende Menge an Notgas aufnehmen.

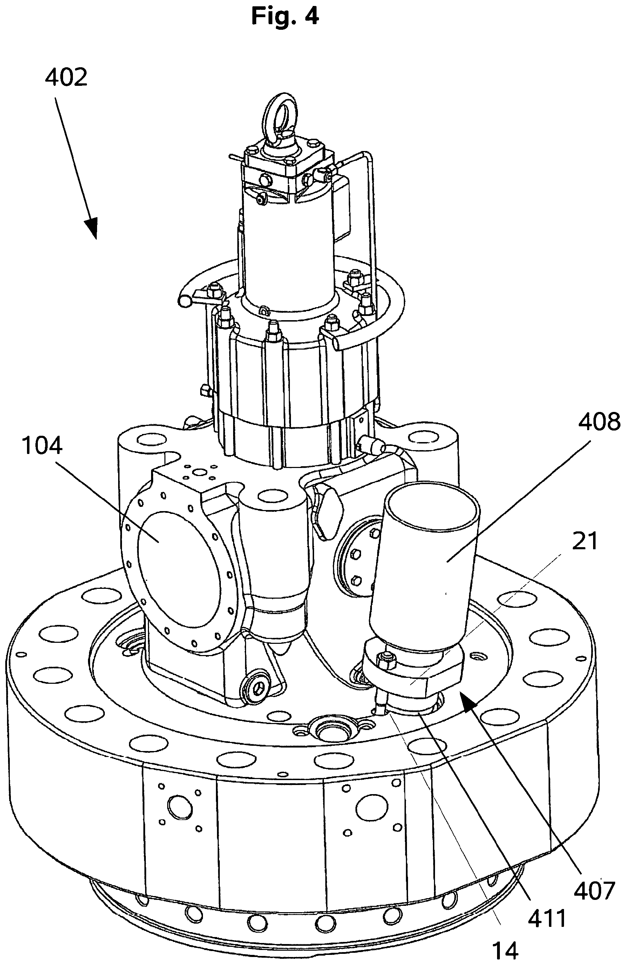

Bei der in Figur 4 gezeigten Ausführungsform eines Zylinderkopfs 402 ist dagegen ein Sollbruchbauteil 407 vorgesehen, welches als Baueinheit mit einem separaten Fangfilter 408 als eigenen Aufnahmeumgebung 408 für die entstehenden Bruchstücke zusammengefasst ist. Auch wenn die bei Bruch der Sollbruchstelle auftretenden heißen Gase hier weiterhin austreten, so können zumindest die entstehenden Bruchstücke zurückgehalten werden und die entstehenden Gase in eine Richtung umgelenkt werden, in der die dadurch hervorgerufenen Gefährdung mimimal ist.

Diese Baueinheit 407 ist insgesamt austauschbar und nicht mit weiteren Zylindern verbunden. Man erkennt, dass das Sollbruchbauteil 407 zum Zweck einer einfacheren Zugänglichkeit an einer um 90° verdrehten Umfangsstellung zum Auslasskanal 104 angeordnet ist. Der Auslasskanal ist Teil einer schon vorstehend genannten Spezialbaugruppe, welche das Auslassventil, dessen Antrieb und den Sitz für den tellerförmigen Ventilkopf umfasst, und einfach austauschbar ist. Dass Sollbruchbauteil 407 weist dabei eine gleichzeitig als Dichtring wirkende Sollbruchscheibe 411 auf, welche über einen Spannflansch 21 durchdringende Schraubbolzen 14 gegen eine nicht näher dargestellte Dichtfläche am Zylinderkopf gespannt wird.

Figur 5 zeigt eine Detailansicht des an den Zylinderköpfen der Figuren 1 und 2 verbauten Sollbruchbauteils 7. Das Sollbruchbauteil weist dabei einen einstückig mit einem Sollbruchplattenabschnitt 11 ausgebildeten Ringflansch bzw. Randflansch 13 auf und ist als Deckel über den Notabblaskanal 6 aufgesetzt und dort mit nicht näher dargestellten, den Randflansch 13 durchdringenden oder umgebenden Schraubbolzen in Position gehalten. Der Randflansch 13 weist dabei eine fein bearbeitete Dichtfläche 15 auf, welche einer ebenfalls fein bearbeiteten Dichtfläche 16 am den Notabblaskanal 6 umgebenden Bereich der Außenseite der Brennkammeraußenwand 3 zugewandt ist, zumindest falls kein zwischengeordnetes Dichtungsmaterial vorhanden ist. Selbstverständlich kann eine solche, vorstehend beschriebene Konstruktion auch tiefer in der Brennkammeraußenwand eingebaut werden, um näher an der Brennkammer angeordnet zu sein und somit das Totvolumen zu verringern, welches zur Brennkammer hin den Notabblaskanal ausfüllt. Ferner kann der Sollbruchplattenabschnitt selbstverständlich auch eine Position bezogen auf den umgebenden Aufbau haben, welche sich im montierten Zustand beispielsweise näher an der Brennkammer befindet.

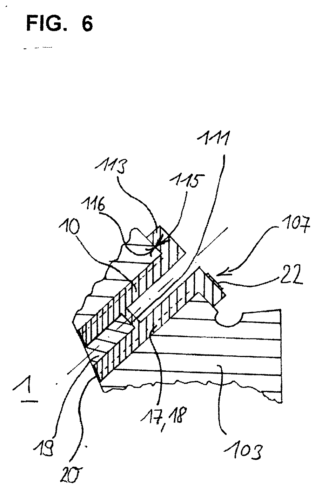

Eine alternative Ausführungsform eines Sollbruchbauteils 107 ist dabei der schematischen Darstellung in Figur 6 zu entnehmen. Das Sollbruchbauteil 107 ist dabei mit einem einen Sollbruchplattenabschnitt 111 tragenden Hülsenabschnitt 10 und einem Deckelabschnitt 113 einstückig ausgebildet und verstopft den Notabblaskanal in der Außenwand 103 der Brennkammer 1 eines Dieselmotors.

Auf seiner Innenseite schließt es mit seiner ringförmigen Stirnoberfläche des Hülsenabschnitts 10 bündig mit der Innenoberfläche der Außenwand 103 ab und ist vorzugsweise mit einer hitze- und korrisionsbeständigen Beschichtung 20 versehen, falls das Hülsenmaterial nicht selbst zufriedenstellend hitze- und korrosionsbeständig ist. Optional kann in dem von dem Hülsenabschnitt 10 und dem Sollbruchplattenabschnitt 111 umschlossenen Innenraum noch ein zusätzliches Hitzeschutzmaterial 19 vorgesehen sein, welches aus einem druckdurchlässigen Wärmeisolationsmaterial besteht. Auf der Außenseite des Zylinderkopfs liegt das Sollbruchbauteil 107 mit seinem Randflansch 113 bzw. mit seiner an dem Randflansch 113 ausgebildeten Dichtfläche 115 auf der am Zylinderkopf ausgebildeten Gegendichtfläche 116 auf. Dabei verläuft der Notabblaskanal oft in Normalrichtung zur ringförmigen Auflagefläche 116, um ein rotationssymmetrisch aufgebautes und daher preisgünstig herzustellendes Sollbruchbauteil verwenden zu können. Mit einer Ausführungsform dieser Art ist es möglich, die Sollbruchscheibe bündig mit der Innenoberfläche der Brennkammeraußenwand anzuordnen. Es ist ebenfalls möglich, das Sollbruchbauteil so zu gestalten, dass es von innen montierbar ist. Die Sollbruchstelle könnte jedoch auch als integraler Bestandteil der Brennkammeraußenwand ausgebildet sein. Wenn der Hülsenabschnitt mit einem Außengewinde ausgeführt ist, um das Sollbruchbauteil in den Notabblaskanal einzuschrauben, kann ein wie der mit 113 bezeichnete Flansch ausgebildete Flansch unnötig sein, da die Umfangsfläche zum Abdichten gegen die Brennkammeraußenwand an einer flachen oder konischen Schulter vorgesehen sein kann, welche das Außengewinde des Hülsenabschnitts einer Nase mit einem kleineren Durchmesser beabstandet, welche zur Brennkammer hin gerichtet ist. Eine solche Verschraubung kann durch ein zusätzliches Belüften des Außengewindes in der Brennkammeraußenwand vorteilhaft dazu genutzt werden, ein Entfernen und Einfügen eines nicht gebrochenen Sollbruchbauteils zu erleichtern, welches dem Pumpeffekt des Kolbens ausgesetzt ist, wenn sich dieser aufgrund einer fortgesetzten Funktion der anderen Zylinder noch in Bewegung befindet.

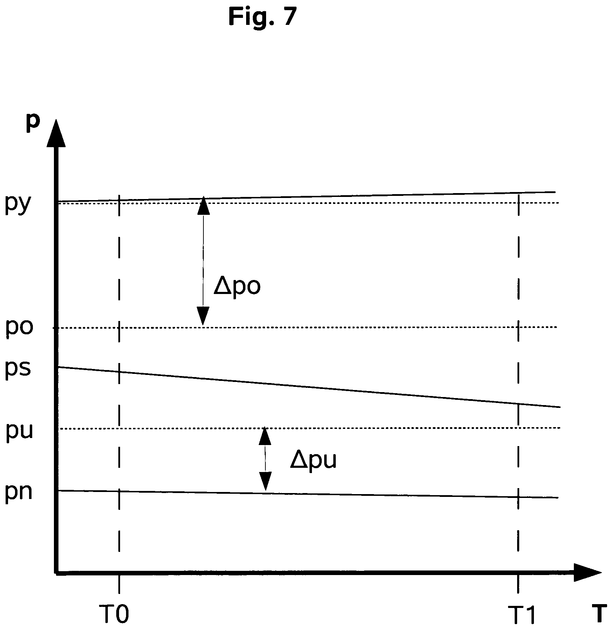

Figur 7 zeigt beispielhaft einige Druckverläufe in einem Temperaturbereich T0-T1, welcher den in einer Brennkammer normalerweise anzutreffenden Temperaturbereich widerspiegelt, also von einer Umgebungstemperatur T0 bei stehendem Motor bis zu einer Temperatur T1 bei schon längerem Betrieb des Motors. Die eingezeichneten Verläufe sind dabei rein beispielhaft gewählt und sollen lediglich verdeutlichen, dass es bei unterschiedlichen Temperaturen zu einem unterschiedlich hohen Überdruck py kommen kann, bei dem eine Motorbeschädigung (das Abheben des Zylinderkopfs und/oder eine Verformung von inneren Bauteilen des Motors) eintritt, sowie zu einem unterschiedlich hohen Sollbruchdruck ps, den die Sollbruchstelle erträgt, und einem unterschiedlich hohen, maximalem Normaldruck pn in der Brennkammer. Daher muss die Sollbruchstelle relativ enge Toleranzen (Schwelldruck pu und Grenzdruck po) einhalten, um genügend Sicherheit (Sicherheitsabstand Δpo) von dem niedrigsten anzunehmenden Zerstörungsüberdruck (py) und dem höchsten anzunehmenden Normaldruck (pn) einzuhalten.

Im Rahmen der Erfindung sind Abweichungen und Modifikationen der dargestellten Ausführungsformen möglich.

Insbesondere wäre es denkbar, als Notabblaskanal einen Einbaukanal eines schon in bisherigen Motoren vorhandenen Sicherheitsventils zu nutzen und das Sollbruchbauteil von seiner Formgebung her auf den Einbaukanal anzupassen.

Die Erfindung verkörpert sich somit in den Merkmalen der nebengeordneten Ansprüche, welche gemäß vorteilhafter Weiterbildungen beliebig mit den Merkmalen der Unteransprüche und den Merkmalen der folgender Punkte kombinierbar sind, soweit dies sinnvoll erscheint:
Punkt 1: Das Sollbruchbauteil umfasst eine Einweg-Montageeinrichtung, welche so ausgebildet sind, dass sie bei Erreichen eines für eine korrekte Montage nötigen Werts eines Montageparameters brechen, um eine mehrfache Montage des Sollbruchbauteils zu verhindern, wobei der vorgegebene Montageparameter vorzugsweise ein Anzugsmoment ist.
Punkt 2: Das Sollbruchbauteil umfasst ferner eine Einrichtung, welche auch nach dem Bruch der Sollbruchstelle einen sicherer Ausbau des Sollbruchbauteils ermöglicht.
Punkt 3: Das Sollbruchbauteil weist ein Gewinde mit einer zu dem Gewinde, mit dem das Sollbruchbauteil in dem Notabblaskanal verschraubt ist, gegenläufigen Steigung auf, also beispielsweise ein Linksgewinde, um eine Einrichtung zum Ausbau des Sollbruchbauteils auch nach dem Bruch der Sollbruchstelle bereitzustellen.

### BEZUGSZEICHENLISTE

- 1: Brennkammer
- 2; 102; 202; 302; 402: Zylinderkopf
- 3; 103: Außenwand
- 4: als Aufnahmeumgebung dienender Auslasskanal
- 104: Auslasskanal
- 5: Abgassammelbehälter
- 105: als Aufnahmeumgeb. dienender Abgassammelbehälter
- 6: Notabblaskanal
- 7; 107; 407: Sollbruchbauteil
- 8, 108: Notgasaufnahmeleitung
- 308: als Aufnahmeumgeb. dienender Notgassammelbehälter
- 408: Fangfilter
- 9: Auslassventil
- 10: Hülsenabschnitt
- 11: Sollbruchplattenabschnitt
- 12: Sollbruchstelle
- 13; 113: Randflansch
- 14: Spannschraubbolzen
- 15; 115: Dichtfläche
- 16; 116: Auflagefläche
- 17: Außengewinde
- 18: Innengewinde
- 19: poröser Festkörper
- 20: Hitzeschutzbeschichtung
- 21: Spannflansch
- 22: Markierung

- ps: Sollbruchdruck
- pu: Schwelldruck
- Δpu: Auslösedruckbetrag
- pn: Brennkammernormaldruck
- po: Grenzdruck
- Δpo: Sicherheitsdruckbetrag
- py: Überdruck
- T0-T1: Normaltemperaturbereich

## Patentansprüche

1. Zweitakt-Kreuzkopf-Großdieselmotor, mit zumindest einer Brennkammer (1), welche von einem Zylinder mehrseitig umschlossen ist, sowie von zumindest einer Oberseite zumindest eines in dem Zylinder auf- und ab bewegten Kolbens, welche eine Außenwand (3; 103) für die Brennkammer (1) bilden, **dadurch gekennzeichnet, dass** die Brennkammer (1) an ihrer Außenwand (3; 103) eine Sollbruchstelle (12) aufweist, und die Sollbruchstelle (12) geeignet ist, um den Dieselmotor gegen mögliche Beschädigungen zu schützen, welche durch einen unerwünscht großen Überdruck (py) von Gasen in der Brennkammer (1) während einer Fehlfunktion des Dieselmotors hervorgerufen werden können, wobei die Sollbruchstelle (12) einen Sollbruchdruck (ps) unterhalb des Überdrucks (py) aufweist, ab dem mit den Beschädigungen gerechnet wird, und oberhalb eines unter normalen Motorbetriebsbedingungen maximal vorgesehenen Brennkammernormaldrucks (pn), insbesondere
einen Sollbruchdruck (ps), der bei jeder Temperatur (T) in einem in der Brennkammer (1) auftretenden Temperaturbereich (T0-T1) größer als ein Schwelldruck (pu) und niedriger als ein Grenzdruck (po) ist, wobei der Schwelldruck (pu) größer als ein unter normalen Motorbetriebsbedingungen maximal auftretender Brennkammernormaldruck (pn) ist und der Grenzdruck (po) niedriger als ein niedrigster Überdruck (py) ist, ab dem mit den Beschädigungen zu rechnen ist, wobei
der Schwelldruck (pu) bevorzugt zumindest um einen Auslösedruckbetrag (Δpu) höher als der unter normalen Motorbetriebsbedingungen maximal auftretende Brennkammernormaldruck (pn) und/oder der Grenzdruck (po) zumindest um einen Sicherheitsdruckbetrag (Δpo) niedriger als der niedrigste Überdruck (py) liegt, ab dem mit den Beschädigungen zu rechnen ist, und wobei der Schwelldruck (pu) im in der Brennkammer (1) auftretenden Temperaturbereich vorzugsweise stets um über 10% höher liegt als der unter normalen Motorbetriebsbedingungen maximal auftretende Brennkammernormaldruck (pn), und besonders bevorzugt größer als 180 bar ist, wobei der Grenzdruck (po) besonders bevorzugt kleiner als 270 bar ist, wobei
ein Notabblaskanal (6) auf der der Brennkammer (1) abgewandten Seite der Sollbruchstelle (12) an eine sichere Aufnahmeumgebung (4; 105; 308; 408) für die beim Bruch der Sollbruchstelle (12) austretenden Bruchstücke und bevorzugt auch für die dabei austretenden heißen Gase angeschlossen ist.

2. Zweitakt-Kreuzkopf-Großdieselmotor nach Anspruch 1, **dadurch gekennzeichnet, dass** die Sollbruchstelle an einem ringförmig um einen Sollbruchplattenabschnitt umlaufenden Rand ausgebildet ist, welcher im Vergleich zur umgebenden Außenwand dünnwandig ist und zur Brennkammer hin konvex gewölbt ist.

3. Zweitakt-Kreuzkopf-Großdieselmotor nach Anspruch 1 oder 2, **dadurch gekennzeichnet, dass** in der Außenwand (3; 103) ein aus der Brennkammer (1) heraus führender Notabblaskanal (6) vorgesehen ist, welcher mit einem separaten Sollbruch-bauteil (7; 107; 407) verschlossen ist, welches zum Verschließen des Notabblaskanals (6) und dazu geeignet ist, den Zweitakt-Kreuzkopf-Großdieselmotor mit Längsspülung gegen die möglichen Beschädigungen zu schützen, die durch den unerwünscht großen Überdruck (py) von Gasen in der Brennkammer (1) während einer Fehlfunktion des Dieselmotors hervorgerufen werden können, wobei das Sollbruchbauteil (7; 107; 407) die für die Außenwand (3; 103) vorgesehene Sollbruchstelle (12) aufweist, welche bei dem Sollbruchdruck (ps) bricht, der unterhalb des Überdrucks (py), ab dem mit den Beschädigungen gerechnet wird, und oberhalb eines unter normalen Motorbetriebsbedingungen maximal vorgesehenen Brennkammernormaldrucks (pn) liegt, wobei
die Sollbruchstelle an einem ringförmig um einen Sollbruchplattenabschnitt umlaufenden Rand ausgebildet ist, welcher im Vergleich zur umgebenden Außenwand dünnwandig ist und zur Brennkammer hin konvex gewölbt ist, und das Sollbruchbauteil (7; 107) einstückig mit dem Sollbruchplattenabschnitt (11) ausgebildet ist.

4. Zweitakt-Kreuzkopf-Großdieselmotor nach Anspruch 3, **dadurch gekennzeichnet, dass** der Sollbruchbauteil eine physische Einrichtung aufweist, mit der eine korrekte Positionierung im Notabblaskanal sicherstellbar ist.

5. Zweitakt-Kreuzkopf-Großdieselmotor nach Anspruch 3 oder 4, **dadurch gekennzeichnet, dass** das Sollbruchbauteil zur den Notabblaskanal (6) abdichtenden Montage vom Brennkammerinneren her ausgebildet ist, nach Einführung in die Brennkammer von außen, wobei das Sollbruchbauteil vorzugsweise eine Form hat, die das Einführen durch einen geradlinigen Kanal erlaubt, der die selben Abmessungen wie der zu verschließende Notabblaskanal aufweist.

6. Zweitakt-Kreuzkopf-Großdieselmotor nach einem der Ansprüche 3 bis 5, **dadurch gekennzeichnet, dass** das Sollbruchbauteil (7; 107; 407) zur den Notabblaskanal (6) abdichtenden Montage von außen her am Motor ausgebildet ist.

7. Zweitakt-Kreuzkopf-Großdieselmotor nach Anspruch 6, **dadurch gekennzeichnet, dass** das Sollbruchbauteil (107) zum Verstopfen des Notabblaskanals als Hülse ausgebildet ist oder einen Hülsenabschnitt (10) umfasst, deren oder dessen Querschnittskontur der Querschnittskontur des Notabblaskanals (6) entspricht und vorzugsweise zylindrisch ist, und insbesondere eine rotationssymmetrische Dichteinrichtung aufweist, welche im montierten Zustand auf der zur Brenn-kammer hin gewandten Seite des Sollbruchbauteils angeordnet ist und das Sollbruchbauteil bevorzugt zur Brennkammer hin abschließt.

8. Zweitakt-Kreuzkopf-Großdieselmotor nach Anspruch 6 oder 7, **dadurch gekennzeichnet, dass** das Sollbruchbauteil (7; 107) als Deckel (7) ausgebildet ist oder einen Deckelabschnitt (113) aufweist, mit welchem es von außen her auf den Notabblaskanal (6) aufsetzbar ist.

9. Zweitakt-Kreuzkopf-Großdieselmotor nach einem der Ansprüche 3 bis 8, **dadurch gekennzeichnet, dass** das Sollbruchbauteil eine konische Schulter aufweist, an der eine Umfangsfläche zum Abdichten gegen die Brennkammeraußenwand vorgesehen ist.

10. Zweitakt-Kreuzkopf-Großdieselmotor nach einem der Ansprüche 3 bis 9, **dadurch gekennzeichnet, dass** zumindest der die Sollbruchstelle umfassende Abschnitt des Sollbruchbauteils aus einem vorzugsweise metallischen Materialgemisch besteht, welches wiederum eine Anzahl Einzelsubstanzen aufweist, wobei mindestens ein aufgezeichnetes Spektrumsprofil der reinen Komponenten dieser Einzelsubstanzen das Materialgemisch des die Sollbruchstelle umfassenden Abschnitts des Sollbruchbauteils identifiziert.

11. Zweitakt-Kreuzkopf-Großdieselmotor nach einem der Ansprüche 3 bis 10, **dadurch gekennzeichnet, dass** eine im montierten Zustand vorzugsweise von außen her ablesbare Markierung (22) auf dem Sollbruchbauteil (107) vorgesehen ist, aus der eine Klassifizierung des Sollbruchbauteils (107) nach Parametern wie z.B. Sollbruchdrucktoleranzen, Einbaudatum und/oder vorgesehene Lebensdauer hervorgeht, wobei die Markierung insbesondere auf einem berührungslos auslesbaren, vorzugsweise elektronisch auslesbaren Speicherbaustein angeordnet ist, beispielsweise einem RFID-Chip.

12. Zweitakt-Kreuzkopf-Großdieselmotor nach einem der Ansprüche 3 bis 11, **dadurch gekennzeichnet, dass** der Dieselmotor eine Einrichtung zum Befestigen zumindest eines separaten Sollbruchbauteils (7; 107; 407) an der Außenwand (3; 103) der Brennkammer (1) aufweist, vorzugsweise an einem auf Seiten eines oberen Totpunkts des Kolbens auf einer Zylinderbuchse montierten Zylinderkopfs (2; 102; 202; 302; 402) oder -deckels.

13. Zweitakt-Kreuzkopf-Großdieselmotor einem der Ansprüche 3 bis 12, **dadurch gekennzeichnet, dass** die Innenoberfläche der Brennkammeraußenwand um den Notabblaskanal herum angefast ist.

14. Zweitakt-Kreuzkopf-Großdieselmotor einem der Ansprüche 3 bis 13, **dadurch gekennzeichnet, dass** das Sollbruchbauteil als den Notabblaskanal verstopfende Hülse ausgebildet ist oder einen den Notabblaskanal verstopfenden Hülsenabschnitt aufweist, deren/dessen der Brennkammer zugewandte Stirnfläche von der Innenoberfläche der Brennkammeraußenwand beabstandet ist.

15. Zweitakt-Kreuzkopf-Großdieselmotor einem der Ansprüche 3 bis 14, **dadurch gekennzeichnet, dass** der Notabblaskanal zwischen der Brennkammer und dem Sollbruchbauteil einen abgeknickten oder gekrümmten Verlauf aufweist.

16. Zweitakt-Kreuzkopf-Großdieselmotor nach einem der Ansprüche 1 bis 15, **dadurch gekennzeichnet, dass** zwischen der Brennkammer (1) und der Sollbruchstelle ein druckdurchlässiges Hitzeschutzmaterial (19) angeordnet ist, insbesondere ein poröser Festkörper, wie beispielsweise ein Metallschaum oder ein Metallnetz, und/oder das Sollbruchbauteil (107) zumindest auf seiner im montierten Zustand der Brennkammer (1) zugewandten Stirnseite einen Hitze- und/oder Korrosionsschutzschirm (19, 20) umfasst, wobei der Hitzeschutzschirm (19, 20) insbesondere eine Beschichtung (19) aus einer hitzebeständigen Legierung umfasst, beispielsweise einer Nickellegierung, und/oder einen porösen Festkörper, beispielsweise einen Metallschaum oder ein Metallnetz.

17. Zweitakt-Kreuzkopf-Großdieselmotor nach einem der Ansprüche 3 bis 16, **dadurch gekennzeichnet, dass** eine der Brennkammer (1) zugewandte Stirnfläche des Sollbruchbauteils (107) und die Innenoberfläche der Außenwand (103) bündig sind.

18. Zweitakt-Kreuzkopf-Großdieselmotor nach einem der Ansprüche 3 bis 17, **dadurch gekennzeichnet, dass** der Zylinder auf seiner Außenseite eine geschlossen um den Notabblaskanal (6) umlaufende Auflagefläche (16; 116) aufweist, und das Sollbruchbauteil (7) einen entsprechenden Spannflansch (13) mit einer korrespondierenden, zur Brennkammer hin gewandten Dichtfläche (14), wobei insbesondere eine umlaufende Dichtung (411), vorzugsweise als Dichtring (411), zwischen der Auflagefläche und der Dichtfläche am Sollbruchbauteil (407) vorgesehen ist.

19. Zweitakt-Kreuzkopf-Großdieselmotor nach einem der Ansprüche 1 bis 18, **dadurch gekennzeichnet, dass** die Aufnahmeumgebung (4) ein an den Auslass der Brennkammer (1) angeschlossener Auslasskanal (4) ist, welcher über eine zur Sollbruchstelle (12) führende Anschlussleitung (8) mit dem Notabblaskanal (6) verbunden ist.

20. Zweitakt-Kreuzkopf-Großdieselmotor nach Anspruch 19, **dadurch gekennzeichnet, dass** die Aufnahmeumgebung (105) für die beim Bruch der Sollbruchstelle (12) austretenden heißen Gase und Bruchstücke ein mit mehreren der Brennkammern (1) des Dieselmotors verbundener Abgassammelbehälter (105) ist, welcher über eine zur Sollbruchstelle (12) führende Anschlussleitung (108) mit dem Notabblaskanal (6) verbunden ist.

21. Zweitakt-Kreuzkopf-Großdieselmotor nach einem der Ansprüche 3 bis 20, **dadurch gekennzeichnet, dass** die Brennkammer (1) durch einen Zylinderkopf (2; 102; 202; 302; 402), und eine mit dem Zylinderkopf (2; 102; 202; 302; 402) verschraubte Zylinderbuchse mehrseitig umschlossen ist und das Sollbruchbauteil (7; 107; 407) nach einem der vorhergehenden Ansprüche 1 bis 9 am Zylinderkopf (2; 102; 202; 302; 402), vorzugsweise exzentrisch an einem Deckel des Zylinderkopfs (2; 102; 202; 302; 402) vorgesehen ist.

22. Zweitakt-Kreuzkopf-Großdieselmotor nach einem der Ansprüche 1 bis 18 oder 21, **dadurch gekennzeichnet, dass** als Aufnahmeumgebung (408) für die beim Bruch der Sollbruchstelle (12) austretenden Bruchstücke für jede Brennkammer (1) ein separater Fangfilter (408) vorgesehen ist, welcher über die Sollbruchstelle (12) mit dem Notabblaskanal (6) verbunden ist.

23. Zweitakt-Kreuzkopf-Großdieselmotor nach einem der Ansprüche 1 bis 22, **dadurch gekennzeichnet, dass** eine Spüleinrichtung zum Bespülen der der Brennkammer abgewandten Seite der Sollbruchstelle bzw. des Sollbruchplattenabschnitts mit einem Kühlmittel, insbesondere mit Kühlwasser oder -gas, vorgesehen ist.

24. Zweitakt-Kreuzkopf-Großdieselmotor nach Anspruch 23, **dadurch gekennzeichnet, dass** eine Spülmittelleitung von einer stromauf einer Spülgaszufuhr zum Zylinder gelegenen Stelle zur Sollbruchstelle vorgesehen ist und als das Kühlmittel eine dem Zylinder zugeführte Ladeluft.

25. Zweitakt-Kreuzkopf-Großdieselmotor nach einem der Ansprüche 23 oder 24, **dadurch gekennzeichnet, dass** die Sollbruchstelle an einem einen Notabblaskanal verschließenden Sollbruchbauteil vorgesehen ist, wobei auf der im eingebauten Zustand der Brennkammer abgewandten Seite des Sollbruchplattenabschnitts eine Zusatzblende in dem Notabblaskanal vorgesehen ist, wobei der Sollbruchplattenabschnitt und die Zusatzblende eine vorzugsweise gegenüber der Wand des Notabblaskanals gegen Kühlmittelaustritt abgedichtete Kühlkammer begrenzen, und wobei die Zusatzblende einen gegenüber dem Sollbruchdruck der Sollbruchstelle geringeren Sollbruchdruck aufweist, wobei als Kühlmittel insbesondere eine Kühlflüssigkeit vorgesehen ist.

26. Zweitakt-Kreuzkopf-Großdieselmotor nach Anspruch 25, **dadurch gekennzeichnet, dass** als Kühlmittel eine Kühlflüssigkeit vorgesehen ist und eine Drosseleinrichtung, über welche im Ansprechen auf einen Bruch der Sollbruchstelle die Kühlmittelzufuhr drosselbar ist.

27. Verfahren zur Vermeidung von möglichen Beschädigungen eines Zweitakt-Kreuzkopf-Großdieselmotors, wobei der Zweitakt-Kreuzkopf-Großdieselmotor zumindest eine Brennkammer (1) aufweist, welche von einem eine Außenwand (3; 103) für die Brennkammer (1) bildenden Zylinder mehrseitig umschlossen ist, sowie von zumindest einer Oberseite zumindest eines in dem Zylinder auf- und ab bewegten Kolbens, **dadurch gekennzeichnet, dass**
zum Verhindern von Beschädigungen des Zweitakt-Kreuzkopf-Großdieselmotors mit Längsspülung, welche durch einen unerwünscht großen Überdruck (py) von Gasen in einer Brennkammer (1) während einer Fehlfunktion des Zweitakt-Kreuzkopf-Großdieselmotors mit Längsspülung auftreten können, zumindest ein Sollbruchbauteil (7; 107; 407) in der Außenwand (3; 103) zumindest einer Brennkammer (1) vorgesehen wird und/oder der Zweitakt-Kreuzkopf-Großdieselmotor gemäß einem der Ansprüche 1 bis 26 aufgebaut wird und
bei einem Druckaufbau in der Brennkammer (1) über den unter normalen Motorbetriebsbedingungen maximal vorgesehenen Brennkammernormaldruck (pn) hinaus ein Bruch der Sollbruchstelle (12) hingenommen und so ein weiterer Druckaufbau bis zu dem die Beschädigungen hervorrufenden Überdruck (py) verhindert wird, wobei
das Sollbruchbauteil (7; 107; 407) zum Verschließen des durch die Außenwand (3; 103) der Brennkammer (1) des Dieselmotors herausführenden Notabblaskanals (6) und dazu geeignet ist, den Dieselmotor gegen mögliche Beschädigungen zu schützen, welche durch einen unerwünscht großen Überdruck (py) von Gasen in der Brennkammer (1) während einer Fehlfunktion des Dieselmotors hervorgerufen werden können, wobei das Sollbruchbauteil (7; 107; 407) eine für die Außenwand (3; 103) vorgesehene Sollbruchstelle (12) aufweist, mit einem Sollbruchdruck (ps) unterhalb des Überdrucks (py), ab dem mit den Beschädigungen gerechnet wird, und oberhalb eines unter normalen Motorbetriebsbedingungen maximal vorgesehenen Brennkammernormaldrucks (pn).

28. Verfahren nach Anspruch 27, **dadurch gekennzeichnet, dass** ein an der Brennkammer vorhandenes Sicherheitsventil durch ein Sollbruchbauteil (7; 107; 407) ersetzt wird, welches zum Verschließen des durch eine Außenwand (3; 103) einer Brennkammer (1) des Dieselmotors herausführenden Notabblaskanals (6) und dazu geeignet ist, den Dieselmotor gegen mögliche Beschädigungen zu schützen, welche durch einen unerwünscht großen Überdruck (py) von Gasen in der Brennkammer (1) während einer Fehlfunktion des Dieselmotors hervorgerufen werden können, wobei das Sollbruchbauteil (7; 107; 407) eine für die Außenwand (3; 103) vorgesehene Sollbruchstelle (12) aufweist, mit einem Sollbruchdruck (ps) unterhalb des Überdrucks (py), ab dem mit den Beschädigungen gerechnet wird, und oberhalb eines unter normalen Motorbetriebsbedingungen maximal vorgesehenen Brennkammernormaldrucks (pn).

29. Verfahren nach Anspruch 28, **dadurch gekennzeichnet, dass** der ursprünglich als Einbaukanal für das Sicherheitsventil dienende, aus der Brennkammer herausführende Kanal als Notabblaskanal umgewidmet und mit einem Sollbruchbauteil (407) verschlossen wird.

30. Verfahren nach einem der Ansprüche 27 bis 31, **dadurch gekennzeichnet, dass** das Sollbruchbauteil vor Erreichen einer festgelegten Lebensdauerbegrenzung ausgetauscht wird, wobei die Lebensdauerbegrenzung beispielsweise einer Markierung des Sollbruchbauteils entnommen wird.

31. Verfahren nach Anspruch 30, **dadurch gekennzeichnet, dass** die Lebensdauerbegrenzung, vor und nach der das Sollbruchbauteil ausgetauscht werden muss, durch Integration der am Sollbruchbauteil aufgetretenen Belastungen über die Zeit abgeschätzt wird.

32. Verfahren nach einem der Ansprüche 27 bis 31, **dadurch gekennzeichnet, dass** eine ständige Überwachung der auftretenden Belastungen am Sollbruchbauteil mittels eines Messsystems vorgenommen wird.

33. Verfahren nach Anspruch 31 oder 32, **dadurch gekennzeichnet, dass** bei einem nicht durchgeführten, aber nötigen Austausch automatisch ein Warnsignal gegeben wird, dass ein Sollbruchbauteil seine Lebensdauer überschritten hat, und der Motor automatisch gedrosselt wird, um das betroffene Sollbruchbauteil lediglich einem gegenüber einem unter normalen Motorbetriebsbedingungen maximal vorgesehenen Brennkammernormaldruck verringerten Druck auszusetzen.

34. Verfahren nach Anspruch 28 oder 30, **dadurch gekennzeichnet, dass** während des Austauschs des Sollbruchbauteils (12) an einem der Zylinder die anderen Zylinder weiterarbeiten.

35. Verfahren nach einem der Ansprüche 28 bis 34, wobei ein Sollbruchbauteil verwendet wird, wobei zumindest der die Sollbruchstelle umfassende Abschnitt des Sollbruchbauteils aus einem vorzugsweise metallischen Materialgemisch besteht, welches wiederum eine Anzahl Einzelsubstanzen aufweist, wobei mindestens ein aufgezeichnetes Spektrumsprofil der reinen Komponenten dieser Einzelsubstanzen das Materialgemisch des die Sollbruchstelle umfassenden Abschnitts des Sollbruchbauteils identifiziert, **dadurch gekennzeichnet, dass** die Herkunft dieses Sollbruchbauteils durch Übereinstimmung mindestens eines später aufgezeichneten Materialkomponenten-Spektrumsprofil für dieses Sollbruchbauteil mit einem früher aufgezeichneten Materialkomponenten-Spektrumsprofil eines gleichartigen Sollbruchbauteils verifiziert wird.

## Claims

1. A two stroke crosshead large Diesel engine comprising at least a combustion chamber (1), which is enclosed by a cylinder on multiple sides, and by at least one upper side of at least one piston moving up and down in the cylinder, which form an outer wall (3; 103) for the combustion chamber (1), **characterized in that** the combustion chamber (1) on its outer wall (3; 103) comprises a predetermined breaking point (12) and the predetermined breaking point (12) is suited to protect the Diesel engine against possible damages, that can be caused by an undesirably high overpressure (py) of gases in the combustion chamber (1) during a malfunction of the Diesel engine, wherein the predetermined breaking point (12) comprises a predetermined breaking pressure (ps) below the overpressure (py) above which damages can be expected, and above a combustion chamber normal pressure (pn) foreseen maximally during normal engine operation conditions, in particular
a predetermined breaking pressure (ps) which at any temperature (T) in a temperature range (T0-T1) occurring in the combustion chamber (1) is higher than a treshold pressure (pu) and lower than a limit pressure (po), wherein the treshold pressure (pu) is higher than a combustion chamber normal pressure (pn) occurring at maximum under normal engine operating conditions, and the limit pressure is lower than a lowest overpressure (py) above which damages are to be expected, wherein
the treshold pressure (pu) is preferably at least by a triggering pressure amount (Δpu) higher than the combustion chamber normal pressure (pn) occurring at maximum under normal engine operating conditions and/or the limit pressure (po) is at least by a safety pressure amount (Δpo) lower than the lowest overpressure (py) where damages are to be expected, and wherein the treshold pressure (pu) in the temperature range occurring in the combustion chamber (1) is preferably always by more than 10% higher than the combustion chamber normal pressure (pn) occurring at maximum under normal motor operating conditions, and is more preferably greater than 180 bar, wherein the limit pressure (po) is more preferably smaller than 270 bar, wherein
the emergency relief duct (6) on the side of the predetermined breaking point (12) facing away from the combustion chamber (1) is connected to a safe receiving environment (4, 105; 308; 408) for the fractions exiting on breakage of the predetermined breaking point (12) and preferably also for the hot gases escaping at the same time.

2. The two stroke crosshead large Diesel engine according to claim 1, **characterized in that** the predetermined breaking point is formed on a ring-shaped circumferential border around a predetermined breaking plate portion which compared with the surrounding outer wall is thin-walled and convexly curved towards the combustion chamber.

3. The two stroke crosshead large Diesel engine according to claims 1 or 2, **characterized in that** in the outer wall (3; 103), an emergency relief duct (6) passing out of the combustion chamber (1) is provided, which is is closed by means of a separate predetermined breaking component (7; 107; 407) being suited for closing the emergency relief duct (6) and being suited to protect the two stroke crosshead large Diesel engine against the possible damages, that can be caused by the undesirably high overpressure (py) of gases in the combustion chamber (1) during a malfunction of the Diesel engine, wherein the predetermined breaking component (7; 107; 407) comprises the predetermined breaking point (12) for the outer wall (3; 103), which predetermined breaking point (12) breaks at the predetermined breaking pressure (ps) below the overpressure (py) above which the damages can be expected, and which is above the combustion chamber normal pressure (pn) foreseen maximally during normal engine operation conditions, wherein
the predetermined breaking point is formed on a ring-shaped circumferential border around a predetermined breaking plate portion which border is thin-walled compared with the surrounding outer wall and convexly curved towards the combustion chamber and the predetermined breaking component (7; 107) is formed integrally with a predetermined breaking plate portion (11).

4. The two stroke crosshead large Diesel engine according to claim 3, **characterized in that** the predetermined breaking component comprises a physical device by means of which a correct positioning in the emergency relief duct can be ensured.

5. The two stroke crosshead large Diesel engine according to claim 3 or 4, **characterized in that** the predetermined breaking component is configured for an assembly from the inside of the combustion chamber thereby sealing the emergency relief duct (6), after introduction into the combustion chamber from the outside, with the predetermined breaking component preferably having a shape which permits the introduction through a rectilinear duct of same dimensions as the emergency relief duct to be closed.

6. The two stroke crosshead large Diesel engine according to one of claims 3 to 5, **characterized in that** the predetermined breaking component (7; 107; 407) is configured for assembly from the outside on the engine thereby sealing the emergency relief duct (6).

7. The two stroke crosshead large Diesel engine according to claim 6, **characterized in that** the predetermined breaking component (107) for plugging the emergency relief duct is formed as a sleeve or comprises a sleeve portion (10), the cross-sectional outline of which corresponds to the cross-sectional outline of the emergency relief duct (6) and is preferably cylindrical, and comprises in particular a rotation-symmetric sealing device located in assembled condition on the side of the predetermined breaking component facing towards the combustion chamber and terminates the predetermined breaking component preferably towards the combustion chamber.

8. The two stroke crosshead large Diesel engine according to claim 6 or 7, **characterized in that** the predetermined breaking component (7; 107; 407) is configured as a lid (7) or comprises a lid portion (113) by means of which it can be placed onto the emergency relief duct (6) from the outside.

9. The two stroke crosshead large Diesel engine according to one of claims 3 to 8, **characterized in that** the predetermined breaking component comprises a conical shoulder, on which a circumferential surface for sealing against the combustion chamber is provided.

10. The two stroke crosshead large Diesel engine according to one of claims 3 to 9, **characterized in that** at least the portion of the predetermined breaking component comprising the predetermined breaking point is composed of a preferably metallic material mixture, which in turn comprises a number of individual substances, with at least a recorded spectrum profile of the mere components of these individual substances identifying the material mixture of the portion of the predetermined breaking component which comprises the predetermined breaking point.

11. The two stroke crosshead large Diesel engine according to one of claims 3 to 10, **characterized in that** in assembled condition a tag (22) preferably readable from the outside is provided on the predetermined breaking component (107), from which a classification of the predetermined breaking component (107) according to parameters such as e.g. predetermined breaking tolerances, date of installation and/or intended service life results, with the tag being located in particular on a contactlessly readable, preferably electronically readable memory chip. e.g. a RFID chip.

12. The two stroke crosshead large Diesel engine according to one of claims 3 to 11, **characterized in that** the Diesel engine comprises a device for fixing at least one predetermined breaking component (7; 107; 407) on the outer wall (3; 103) of the combustion chamber (1), preferably on a cylinder head (2; 102; 202; 302; 402) or cover assembled on a cylinder liner on the side of an upper dead center of the piston.

13. The two stroke crosshead large Diesel engine according to one of claims 3 to 12, **characterized in that** the inner surface of the combustion chamber outer wall is chamfered around the emergency relief duct.

14. The two stroke crosshead large Diesel engine according to one of claims 3 to 13, **characterized in that** the predetermined breaking component is configured as a sleeve obstructing the emergency relief duct or comprises a sleeve portion obstructing the emergency relief duct, the front side of which facing towards the combustion chamber is spaced apart from the inner surface of the combustion chamber outer wall.

15. The two stroke crosshead large Diesel engine according to one of claims 3 to 4, **characterized in that** the emergency relief duct has a buckled or curved pattern between the combustion chamber and the predetermined breaking component.

16. The two stroke crosshead large Diesel engine according to one of claims 1 to 15, **characterized in that** between the combustion chamber (1) and the predetermined breaking point a pressure permeable heat insulation material (19) is provided, in particular a porous solid body such as e.g. a metal foam or a metal net and/or the predetermined breaking component (107) at least on its front side facing towards the combustion chamber (1) in assembled condition comprises a heat and/or corrosion protection shield (19, 20), with the heat protection shield (19, 20) especially comprising a coating (19) out of a heat-resistant alloy, e.g. a nickel alloy, and/or a porous solid body, e.g. a metal foam or a metal net.

17. The two stroke crosshead large Diesel engine according to one of claims 3 to 16, **characterized in that** a front side of the predetermined breaking component (107) facing towards the combustion chamber (1) and the inner surface of the outer wall (103) is flush mounted.

18. The two stroke crosshead large Diesel engine according to one of claims 3 to 17, **characterized in that** the cylinder on its outside comprises a closed circumferential bearing surface (16; 116) around the emergency relief duct (6) and the predetermined breaking component (7) a corresponding clamping flange (13) with a mating sealing surface (14) facing towards the combustion chamber, with in particular a circumferential sealing (411), preferably as a sealing ring (411), being provided between the bearing surface and the sealing surface on the predetermined breaking component (407).

19. The two stroke crosshead large Diesel engine according to one of claims 1 to 18, **characterized in that** the receiving environment (4) is an exhaust duct (4) connected to the combustion chamber (1) outlet which is connected with the emergency relief duct (6) via a connecting line (8) leading to the predetermined breaking point (12).

20. The two stroke crosshead large Diesel engine according to claim 19, **characterized in that** the receiving environment (105) for the hot gases and fractions escaping on breakage of the predetermined breaking point (12) is an exhaust gas collector (105) connected with several of the Diesel engine combustion chambers (1), which is connected with the emergency relief duct (6) via a connecting line (108) leading to the predetermined breaking point (12).

21. The two stroke crosshead large Diesel engine according to one of claims 3 to 20, **characterized in that** the combustion chamber (1) is closed on multiple sides by a cylinder head (2; 102; 202; 302; 402) and a cylinder liner screwed with the cylinder head (2; 102; 202; 302; 402), and the predetermined breaking component (7; 107; 407) according to any one of the preceding claims 1 to 9 is provided on the cylinder head (2; 102; 202; 302; 402), preferably eccentrically on a lid of the cylinder head (2; 102; 202; 302; 402).

22. The two stroke crosshead large Diesel engine according to according to one of claims 1 to 18 or 21, **characterized in that** as the receiving environment (408) for the fractions emerging on breakage of the predetermined breaking point (12) a separate collecting filter (408) is provided for each combustion chamber (1) which is connected with the emergency relief duct (6) via the predetermined breaking point (12).

23. The two stroke crosshead large Diesel engine according to one of claims 1 to 22, **characterized in that** a flushing device for flushing the side of the predetermined breaking point and/or the predetermined breaking plate portion facing away from the combustion chamber with a coolant, in particular with cooling water or cooling gas, is provided.

24. The Diesel engine according to claim 23, **characterized in that** a flushing agent line is provided from a location upstream of a scavenge gas supply to the cylinder to the predetermined breaking point, and as the coolant a charge air fed to the cylinder.

25. The two stroke crosshead large Diesel engine according to claim 24 or 25, **characterized in that** the predetermined breaking point is provided on a predetermined breaking component closing the emergency relief duct, wherein on the side of the predetermined breaking plate portion facing away from the combustion chamber in assembled condition, an additional cover is provided in the emergency relief duct, wherein the predetermined breaking plate portion and the additional cover delimit a cooling chamber sealed preferably against the wall of the emergency relief duct from coolant outlet, and wherein the additional cover comprises a lower predetermined breaking pressure compared with the predetermined breaking pressure of the predetermined breaking point, wherein in particular a cooling liquid is provided as a coolant.

26. The two stroke crosshead large Diesel engine according to claim 25, **characterized in that** a cooling liquid is provided as a coolant and a throttle device is provided by means of which the coolant supply can be throttled in response to a breakage of the predetermined breaking point.

27. A method for avoiding possible damages of a two stroke crosshead large Diesel engine, wherein the two stroke crosshead large Diesel engine comprises at least one combustion chamber (1) which is enclosed by a cylinder on multiple sides, which cylinder forms an outer wall (3; 103) for the combustion chamber (1), as well as by at least one upper side of at least one piston moving up and down in the cylinder, **characterized in that**
for avoiding damages of a two-stroke crosshead large Diesel engine with longitudinal scavenging, which might occur due to an undesirably high overpressure (py) of gases in a combustion chamber (1) during a malfunction of the two-stroke crosshead large Diesel engine with longitudinal scavenging, at least one predetermined breaking component (7; 107; 407) is provided in the outer wall (3; 103) of at least one combustion chamber (1), and/or the two stroke crosshead large Diesel engine is configured according to one of claims 1 to 26, and
at a pressure build-up in the combustion chamber (1) beyond the combustion chamber normal pressure (pn) foreseen maximally under normal engine operating conditions, breakage of the predetermined breaking point (12) is accepted and thus further pressure build-up up to the overpressure (py) causing damages is prevented, wherein
the predetermined breaking component (7; 107; 407) is suited for closing the emergency relief duct (6) leading through the outer wall (3; 103) of the combustion chamber (1) of the Diesel engine and suited to protect the Diesel engine against possible damage that can be caused by an undesirably high overpressure (py) of gases in the combustion chamber (1) during a malfunction of the Diesel engine, wherein the predetermined breaking component (7; 107; 407) comprises a predetermined breaking point (12) for the outer wall (3; 103), with a predetermined breaking pressure (ps) below the overpressure (py) above which damages can be expected, and above a combustion chamber normal pressure (pn) foreseen maximally during normal engine operation conditions.

28. The method according to claim 27, **characterized in that** a safety valve existing on the combustion chamber is replaced by a predetermined breaking component (7; 107; 407) wherein the predetermined breaking component (7; 107; 407) is suited for closing the emergency relief duct (6) leading through the outer wall (3; 103) of the combustion chamber (1) of the Diesel engine and suited to protect the Diesel engine against possible damage that can be caused by an undesirably high overpressure (py) of gases in the combustion chamber (1) during a malfunction of the Diesel engine, wherein the predetermined breaking component (7; 107; 407) comprises a predetermined breaking point (12) for the outer wall (3; 103), with a predetermined breaking pressure (ps) below the overpressure (py) above which damages can be expected, and above a combustion chamber normal pressure (pn) foreseen maximally during normal engine operation conditions.

29. The method according to claim 28, **characterized in that** the duct passing out of the combustion chamber originally serving as a mounting duct for the safety valve is rededicated as an emergency relief duct and closed by means of a predetermined breaking component (407).

30. The method according to one of claims 27 to 31, **characterized in that** the predetermined breaking component is replaced before a determined service life limit is achieved, with the service life limit e.g. being taken from a tag of the predetermined breaking component.

31. The method according to claim 30, **characterized in that** the service life limit before and after which the predetermined breaking component must be replaced is estimated by integration of the loads occurred on the predetermined breaking component versus time.

32. The method according to one of claims 27 to 31, **characterized in that** constant monitoring of the loads occurring on the predetermined breaking component is made by means of a measuring system.

33. The method according to claim 31 or 32, **characterized in that** in the event of a replacement not having been made but which is required, a warning signal is automatically sent that a predetermined breaking component has exceeded its service life and the engine is automatically throttled in order to subject the predetermined breaking component concerned only to a pressure which is reduced compared with a combustion chamber normal pressure provided at maximum under normal engine operating conditions.

34. The method according to claim 28 or 30, **characterized in that** during replacement of the predetermined breaking component (12) on one of the cylinders, the other cylinders continue to operate.

35. The method according to one of claims 28 to 34, wherein a predetermined breaking component is used, and wherein at least the portion of the predetermined breaking component comprising the predetermined breaking point is composed of a preferably metallic material mixture, which in turn comprises a number of individual substances, with at least a recorded spectrum profile of the mere components of these individual substances identifying the material mixture of the portion of the predetermined breaking component which comprises the predetermined breaking point, **characterized in that** the origin of said predetermined breaking component is verified by conformity of at least one material component spectrum profile for said predetermined breaking component recorded later with a material component spectrum profile of a similar predetermined breaking component recorded earlier.

## Revendications

1. Gros moteur diesel à crosse à deux temps, comprenant au moins une chambre de combustion (1) qui est entourée de plusieurs côtés par un cylindre, ainsi que par au moins une face supérieure d'au moins un piston animé d'un mouvement montant et descendant à l'intérieur du cylindre, lesquels forment une paroi extérieure (3; 103) pour la chambre de combustion (1), **caractérisé par le fait que** la chambre de combustion (1) présente sur sa paroi extérieure (3; 103) un point destiné à la rupture (12) et ledit point destiné à la rupture (12) est approprié pour protéger le moteur diesel contre d'éventuels endommagements qui peuvent être provoqués par une surpression (py) indésirablement élevée de gaz dans la chambre de combustion (1) pendant un dysfonctionnement du moteur diesel, le point destiné à la rupture (12) présentant une pression de rupture (ps) inférieure à la surpression (py), à partir de laquelle on peut s'attendre aux endommagements, et supérieure à une pression normale de chambre de combustion (pn) maximale prévue dans des conditions normales de fonctionnement du moteur, en particulier
une pression de rupture (ps) qui, à chaque température (T) se situant dans une plage de températures (T0-T1) présente à l'intérieur de la chambre de combustion (1), est supérieure à une pression de seuil (pu) et inférieure à une pression limite (po), la pression de seuil (pu) étant supérieure à une pression normale de chambre de combustion (pn) maximale se présentant dans des conditions normales de fonctionnement du moteur, et la pression limite (po) étant inférieure à une surpression (py) la plus basse à partir de laquelle il faut s'attendre aux endommagements, dans lequel
la pression de seuil (pu) est supérieure de préférence d'au moins une valeur de pression de déclenchement (Δpu) à la pression normale de chambre de combustion (pn) maximale se présentant dans des conditions normales de fonctionnement du moteur, et/ou la pression limite (po) est inférieure d'au moins d'une valeur de pression de sécurité (Δpo) à la surpression (py) la plus basse à partir de laquelle il faut s'attendre aux endommagements, et dans lequel la pression de seuil (pu) dans la plage de températures présente à l'intérieur de la chambre de combustion (1) est de préférence toujours supérieure de plus de 10 % à la pression normale de chambre de combustion (pn) maximale se présentant dans des conditions normales de fonctionnement du moteur, et, de manière particulièrement préférée, est supérieure à 180 bars, dans lequel, de manière particulièrement préférée, la pression limite (po) est inférieure à 270 bars, dans lequel
un canal de décharge de secours (6) est raccordé, sur le côté du point destiné à la rupture (12) qui est opposé à la chambre de combustion (1), à un environnement de réception (4; 105; 308; 408) sûr pour les morceaux sortant lors de la rupture du point destiné à la rupture (12), et également, de préférence, pour les gaz chauds s'échappant lors de celle-ci.

2. Gros moteur diesel à crosse à deux temps selon la revendication 1, **caractérisé par le fait que** le point destiné à la rupture est réalisé sur un bord qui s'étend en anneau tout autour d'une section de plaque de rupture et qui, en comparaison de la paroi extérieure environnante, est à paroi mince et est bombé de manière convexe vers la chambre de combustion.

3. Gros moteur diesel à crosse à deux temps selon la revendication 1 ou 2, **caractérisé par le fait que** dans la paroi extérieure (3; 103) est prévu un canal de décharge de secours (6) qui mène hors de la chambre de combustion (1) et qui est obturé par l'intermédiaire d'un composant destiné à la rupture (7; 107; 407) séparé qui est apte à fermer le canal de décharge de secours (6) et à protéger le gros moteur diesel à crosse à deux temps à rinçage longitudinal contre les éventuels endommagements qui peuvent être provoqués par la surpression (py) indésirablement élevée de gaz dans la chambre de combustion (1) pendant un dysfonctionnement du moteur diesel, dans lequel ledit composant destiné à la rupture (7; 107; 407) présente le point destiné à la rupture (12) prévu pour la paroi extérieure (3; 103), qui se rompt à la pression de rupture (ps) laquelle est inférieure à la surpression (py) à partir de laquelle on s'attend aux endommagements et supérieure à une pression normale de chambre de combustion (pn) maximale prévue dans des conditions normales de fonctionnement du moteur, dans lequel
le point destiné à la rupture est réalisé sur un bord qui s'étend en anneau tout autour d'une section de plaque de rupture et qui, en comparaison de la paroi extérieure environnante, est à paroi mince et est bombé de manière convexe vers la chambre de combustion, et ledit composant destiné à la rupture (7; 107) est réalisé d'un seul tenant avec la section de plaque de rupture (11).

4. Gros moteur diesel à crosse à deux temps selon la revendication 3, **caractérisé par le fait que** le composant destiné à la rupture présente un dispositif physique par le biais duquel on peut assurer un positionnement correct dans le canal de décharge de secours.

5. Gros moteur diesel à crosse à deux temps selon la revendication 3 ou 4, **caractérisé par le fait que**, pour le montage étanchant le canal de décharge de secours (6), le composant destiné à la rupture est réalisé depuis l'intérieur de la chambre de combustion, après l'introduction dans la chambre de combustion depuis l'extérieur, le composant destiné à la rupture présentant de préférence une forme qui permet l'introduction à travers un canal rectiligne qui présente les mêmes dimensions que le canal de décharge de secours à fermer.

6. Gros moteur diesel à crosse à deux temps selon l'une quelconque des revendications 3 à 5, **caractérisé par le fait que**, pour le montage étanchant le canal de décharge de secours (6), le composant destiné à la rupture (7; 107; 407) est réalisé depuis l'extérieur sur le moteur.

7. Gros moteur diesel à crosse à deux temps selon la revendication 6, **caractérisé par le fait que**, pour obstruer le canal de décharge de secours, le composant destiné à la rupture (107) est réalisé en tant que douille ou comprend une portion de douille (10) dont le contour de section transversale correspond au contour de section transversale du canal de décharge de secours (6) et est de préférence cylindrique, et présente en particulier un dispositif d'étanchéité à symétrie de révolution qui, en état monté, est disposé sur le côté du composant destiné à la rupture qui montre vers la chambre de combustion, et qui ferme le composant destiné à la rupture de préférence vers la chambre de combustion.

8. Gros moteur diesel à crosse à deux temps selon la revendication 6 ou 7, **caractérisé par le fait que** le composant destiné à la rupture (7; 107) est réalisé en tant que couvercle (7) ou présente une portion de couvercle (113) par lequel/laquelle il peut être posé depuis l'extérieur sur le canal de décharge de secours (6).

9. Gros moteur diesel à crosse à deux temps selon l'une quelconque des revendications 3 à 8, **caractérisé par le fait que** le composant destiné à la rupture présente un épaulement conique sur lequel est prévu une surface périphérique pour un étanchement contre la paroi extérieure de la chambre de combustion.

10. Gros moteur diesel à crosse à deux temps selon l'une quelconque des revendications 3 à 9, **caractérisé par le fait qu'**au moins la section du composant destiné à la rupture laquelle comprend le point destiné à la rupture est réalisée dans un mélange de matériaux de préférence métalliques qui, à son tour, présente un nombre de substances individuelles, au moins un profil de spectre enregistré des composants purs de ces substances individuelles identifiant le mélange de matériaux de la section du composant destiné à la rupture laquelle comprend le point destiné à la rupture.

11. Gros moteur diesel à crosse à deux temps selon l'une quelconque des revendications 3 à 10, **caractérisé par le fait que** sur le composant destiné à la rupture (107) est prévu un repère (22) qui peut être lu en état monté de préférence depuis l'extérieur et duquel ressort une classification du composant destiné à la rupture (107) selon des paramètres, tels que, par exemple, les tolérances de pression de rupture, la date de montage et/ou la durée de vie prévue, ledit repère étant disposé en particulier sur un composant de mémoire lisible sans contact, de préférence lisible de manière électronique, comme par exemple une puce RFID.

12. Gros moteur diesel à crosse à deux temps selon l'une quelconque des revendications 3 à 11, **caractérisé par le fait que** le moteur diesel présente un dispositif de fixation d'au moins un composant destiné à la rupture (7; 107; 407) séparé sur la paroi extérieure (3; 103) de la chambre de combustion (1), de préférence sur une tête (2; 102; 202; 302; 402) ou couvercle de cylindre monté(e) du côté d'un point mort haut du piston sur une chemise du cylindre.

13. Gros moteur diesel à crosse à deux temps selon l'une quelconque des revendications 3 à 12, **caractérisé par le fait que** la surface intérieure de la paroi extérieure de chambre de combustion autour du canal de décharge de secours est chanfreinée.

14. Gros moteur diesel à crosse à deux temps selon l'une quelconque des revendications 3 à 13, **caractérisé par le fait que** le composant destiné à la rupture est réalisé en tant que douille obstruant le canal de décharge de secours ou présente une portion de douille obstruant le canal de décharge de secours, dont la face frontale montrant vers la chambre de combustion est espacée de la surface intérieure de la paroi extérieure de chambre de combustion.

15. Gros moteur diesel à crosse à deux temps selon l'une quelconque des revendications 3 à 14, **caractérisé par le fait que** le canal de décharge de secours entre la chambre de combustion et le composant destiné à la rupture présente une allure coudée ou courbée.

16. Gros moteur diesel à crosse à deux temps selon l'une quelconque des revendications 1 à 15, **caractérisé par le fait qu'**un matériau de protection contre la chaleur (19) perméable à la pression est disposé entre la chambre de combustion (1) et le point destiné à la rupture, en particulier un solide poreux, tel que, par exemple, une mousse métallique ou un filet métallique, et/ou que le composant destiné à la rupture (107) comprend un écran protecteur contre la chaleur et/ou la corrosion (19, 20) au moins sur sa face frontale qui, en état monté, montre vers la chambre de combustion (1), dans lequel ledit écran protecteur contre la chaleur (19, 20) comprend en particulier un revêtement (19) en un alliage résistant à la chaleur, par exemple un alliage de nickel, et/ou un solide poreux, par exemple une mousse métallique ou un filet métallique.

17. Gros moteur diesel à crosse à deux temps selon l'une quelconque des revendications 3 à 16, **caractérisé par le fait qu'**une face frontale du composant destiné à la rupture (107) qui est tournée vers la chambre de combustion (1) ainsi que la surface intérieure de la paroi extérieure (103) sont affleurées.

18. Gros moteur diesel à crosse à deux temps selon l'une quelconque des revendications 3 à 17, **caractérisé par le fait que**, sur sa face extérieure, le cylindre présente une surface d'appui (16; 116) s'étendant de manière fermée tout autour du canal de décharge de secours (6), et le composant destiné à la rupture (7) présente une bride de serrage (13) correspondante ayant une surface d'étanchéité (14) correspondante tournée vers la chambre de combustion, dans lequel, en particulier, un joint d'étanchéité (411) périphérique, de préférence en tant que bague d'étanchéité (411), est prévu entre ladite surface d'appui et la surface d'étanchéité sur le composant destiné à la rupture (407).

19. Gros moteur diesel à crosse à deux temps selon l'une quelconque des revendications 1 à 18, **caractérisé par le fait que** ledit environnement de réception (4) est un canal de sortie (4) qui est raccordé à la sortie de la chambre de combustion (1) et qui est relié au canal de décharge de secours (6) via une conduite de raccordement (8) menant vers le point destiné à la rupture (12).

20. Gros moteur diesel à crosse à deux temps selon la revendication 19, **caractérisé par le fait que** l'environnement de réception (105) pour les gaz chauds et morceaux sortant lors de la rupture du point destiné à la rupture (12) est un récipient collecteur de gaz d'échappement (105) qui est relié à plusieurs des chambres de combustion (1) du moteur diesel et qui est relié au canal de décharge de secours (6) via une conduite de raccordement (108) menant vers le point destiné à la rupture (12).

21. Gros moteur diesel à crosse à deux temps selon l'une quelconque des revendications 3 à 20, **caractérisé par le fait que** la chambre de combustion (1) est entourée de plusieurs côtés par une tête de cylindre (2; 102; 202; 302; 402), et par une chemise du cylindre vissée à la tête de cylindre (2; 102; 202; 302; 402) et que le composant destiné à la rupture (7; 107; 407) selon l'une quelconque des revendications précédentes 1 à 9 est prévu sur la tête de cylindre (2; 102; 202; 302; 402), de préférence de manière excentrique sur un couvercle de la tête de cylindre (2; 102; 202; 302; 402).

22. Gros moteur diesel à crosse à deux temps selon l'une quelconque des revendications 1 à 18 ou 21, **caractérisé par le fait qu'**un filtre de rétention (408) séparé qui est relié via le point destiné à la rupture (12) au canal de décharge de secours (6) est prévu en tant qu'environnement de réception (408) pour les morceaux sortant lors de la rupture du point destiné à la rupture (12), pour chaque chambre de combustion (1).

23. Gros moteur diesel à crosse à deux temps selon l'une quelconque des revendications 1 à 22, **caractérisé par le fait qu'**un dispositif de rinçage destiné à rincer le côté du point destiné à la rupture ou bien de la section de plaque de rupture, lequel est opposé à la chambre de combustion, avec un agent réfrigérant, en particulier avec de l'eau ou du gaz de refroidissement est prévu.

24. Gros moteur diesel à crosse à deux temps selon la revendication 23, **caractérisé par le fait que** l'on prévoit une conduite d'agent de rinçage s'étendant depuis un point situé en amont d'une alimentation en gaz de rinçage du cylindre vers le point destiné à la rupture, et qu'un air d'alimentation amené au cylindre est prévu en tant qu'agent réfrigérant.

25. Gros moteur diesel à crosse à deux temps selon l'une quelconque des revendications 23 ou 24, **caractérisé par le fait que** le point destiné à la rupture est prévu sur un composant destiné à la rupture qui ferme un canal de décharge de secours, dans lequel un obturateur supplémentaire est prévu dans le canal de décharge de secours sur le côte de la section de plaque de rupture, qui, en état monté, est opposé à la chambre de combustion, la section de plaque de rupture et ledit obturateur supplémentaire délimitant une chambre de refroidissement rendue étanche de préférence par rapport à la paroi du canal de décharge de secours contre une sortie d'agent réfrigérant, et dans lequel l'obturateur supplémentaire présente une pression de rupture inférieure à la pression de rupture du point destiné à la rupture, en particulier un liquide de refroidissement étant prévu comme agent réfrigérant.

26. Gros moteur diesel à crosse à deux temps selon la revendication 25, **caractérisé par le fait que** l'on prévoit un liquide de refroidissement comme agent réfrigérant ainsi qu'un dispositif d'étranglement par le biais duquel on peut réduire l'alimentation en agent réfrigérant en réponse à une rupture du point destiné à la rupture.

27. Procédé destiné à éviter d'éventuels endommagements d'un gros moteur diesel à crosse à deux temps, dans lequel ledit gros moteur diesel à crosse à deux temps comprend au moins une chambre de combustion (1) qui est entourée de plusieurs côtés par un cylindre formant une paroi extérieure (3; 103) pour la chambre de combustion (1), ainsi que par au moins une face supérieure d'au moins un piston animé d'un mouvement montant et descendant à l'intérieur du cylindre, **caractérisé par le fait que**,
pour éviter des endommagements du gros moteur diesel à crosse à deux temps à rinçage longitudinal, qui peuvent être provoqués par une surpression (py) indésirablement élevée de gaz dans une chambre de combustion (1) pendant un dysfonctionnement du gros moteur diesel à crosse à deux temps à rinçage longitudinal, on prévoit au moins un composant destiné à la rupture (7; 107; 407) dans la paroi extérieure (3; 103) d'au moins une chambre de combustion (1), et/ou le gros moteur diesel à crosse à deux temps est conçu selon l'une quelconque des revendications 1 à 26, et que,
dans le cas d'une montée en pression dans la chambre de combustion (1) allant au-delà de la pression normale de chambre de combustion (pn) maximale prévue dans des conditions normales de fonctionnement du moteur, une rupture du point destiné à la rupture (12) est acceptée et une autre montée en pression jusqu'à la surpression (py) provoquant les endommagements est ainsi évitée, dans lequel
ledit composant destiné à la rupture (7; 107; 407) est apte à fermer le canal de décharge de secours (6) passant vers l'extérieur à travers la paroi extérieure (3; 103) de la chambre de combustion (1) du moteur diesel et à protéger le moteur diesel contre d'éventuels endommagements qui peuvent être provoqués par une surpression (py) indésirablement élevée de gaz dans la chambre de combustion (1) pendant un dysfonctionnement du moteur diesel, dans lequel ledit composant destiné à la rupture (7; 107; 407) présente un point destiné à la rupture (12) prévu pour la paroi extérieure (3; 103), ayant une pression de rupture (ps) inférieure à la surpression (py) à partir de laquelle on s'attend aux endommagements et supérieure à une pression normale de chambre de combustion (pn) maximale prévue dans des conditions normales de fonctionnement du moteur.

28. Procédé selon la revendication 27, **caractérisé par le fait qu'**une soupape de sûreté présente sur la chambre de combustion est remplacée par un composant destiné à la rupture (7; 107; 407) qui est apte à fermer le canal de décharge de secours (6) passant vers l'extérieur à travers la paroi extérieure (3; 103) d'une chambre de combustion (1) du moteur diesel et à protéger le moteur diesel contre d'éventuels endommagements qui peuvent être provoqués par une surpression (py) indésirablement élevée de gaz dans la chambre de combustion (1) pendant un dysfonctionnement du moteur diesel, dans lequel ledit composant destiné à la rupture (7; 107; 407) présente un point destiné à la rupture (12) prévu pour la paroi extérieure (3; 103), ayant une pression de rupture (ps) inférieure à la surpression (py) à partir de laquelle on s'attend aux endommagements et supérieure à une pression normale de chambre de combustion (pn) maximale prévue dans des conditions normales de fonctionnement du moteur.

29. Procédé selon la revendication 28, **caractérisé par le fait que** la canal servant initialement de canal de montage pour ladite soupape de sûreté et menant hors de la chambre de combustion change de destination pour faire office de canal de décharge de secours et est fermé par un composant destiné à la rupture (407).

30. Procédé selon l'une quelconque des revendication 27 à 31, **caractérisé par le fait que** le composant destiné à la rupture est échangé avant d'atteindre une limitation de durée de vie déterminée, dans lequel la limitation de durée de vie ressort par exemple d'un repère du composant destiné à la rupture.

31. Procédé selon la revendication 30, **caractérisé par le fait que** la limitation de durée de vie avant et après laquelle le composant destiné à la rupture doit être échangé est estimée par intégration, en fonction du temps, des contraintes qui se sont présentées sur le composant destiné à la rupture.

32. Procédé selon l'une quelconque des revendications 27 à 31, **caractérisé par le fait que** l'on réalise une surveillance permanente, au moyen d'un système de mesure, des contraintes se présentant sur le composant destiné à la rupture.

33. Procédé selon la revendication 31 ou 32, **caractérisé par le fait que**, lorsqu'un échange qui est nécessaire n'est pas réalisé, un signal d'alarme est automatiquement délivré disant qu'un composant destiné à la rupture a dépassé sa durée de vie, et le moteur est automatiquement freiné afin de soumettre le composant destiné à la rupture concerné uniquement à une pression réduite par rapport une pression normale de chambre de combustion maximale prévue dans des conditions normales de fonctionnement du moteur.

34. Procédé selon la revendication 28 ou 30, **caractérisé par le fait que**, lorsque le composant destiné à la rupture (12) sur un cylindre est échangé, les autres cylindres continuent à travailler.

35. Procédé selon l'une quelconque des revendications 28 à 34, dans lequel on utilise un composant destiné à la rupture, dans lequel au moins la section du composant destiné à la rupture laquelle comprend le point destiné à la rupture est réalisée dans un mélange de matériaux de préférence métalliques qui, à son tour, présente un nombre de substances individuelles, au moins un profil de spectre enregistré des composants purs de ces substances individuelles identifiant le mélange de matériaux de la section du composant destiné à la rupture laquelle comprend le point destiné à la rupture, **caractérisé par le fait que** l'origine de ce composant destiné à la rupture est vérifiée par une concordance d'au moins un profil de spectre de composants de matériau pour ce composant destiné à la rupture, qui est enregistré ultérieurement, avec un profil de spectre de composants de matériau d'un composant similaire destiné à la rupture, qui est enregistré antérieurement.
